(19) Europäisches Patentamt
European Patent Office
Office européen des brevets

(11) **EP 1 606 889 B1**

(12) **EUROPEAN PATENT SPECIFICATION**

(45) Date of publication and mention
of the grant of the patent:
**17.09.2008 Bulletin 2008/38**

(21) Application number: **03724914.1**

(22) Date of filing: **13.03.2003**

(51) Int Cl.:
**H04B 1/707** (2006.01)

(86) International application number:
**PCT/EP2003/002644**

(87) International publication number:
**WO 2004/082164 (23.09.2004 Gazette 2004/39)**

(54) **ADAPTIVE MULTIUSER INTERFERENCE CANCELLER AND MULTIUSER DETECTOR**

ADAPTIVE UNTERDRÜCKUNG VON MEHRBENUTZERINTERFERENZ UND MEHRBENUTZERDETEKTOR

ELIMINATEUR D'INTERFERENCES MULTIUTILISATEUR ADAPTATIF ET DETECTEUR MULTIUTILISATEUR

(84) Designated Contracting States:
**DE GB**

(43) Date of publication of application:
**21.12.2005 Bulletin 2005/51**

(73) Proprietor: **NTT DoCoMo, Inc.**
**Tokyo 100-6150 (JP)**

(72) Inventor: **DENNO, Satoshi**
**Gokasho**
**611-0011 Uji (JP)**

(74) Representative: **HOFFMANN EITLE**
**Patent- und Rechtsanwälte**
**Arabellastrasse 4**
**81925 München (DE)**

(56) References cited:
- **ABED-MERAIM K ET AL: "A blind interference canceller in DS-CDMA" IEEE PROCEEDINGS, vol. 2, 6 September 2000 (2000-09-06), pages 358-362, XP010516601**
- **SUN JIN YEOM ET AL: "Multi-user detection using CMA & the cancellation method in fast-fading channels" IEEE PROCEEDINGS, vol. 6, 24 September 2000 (2000-09-24), pages 2844-2848, XP010525100**
- **BIEDKA T E ET AL: "Statistics of blind spatial signature estimators" IEEE PROCEEDINGS, vol. 2, 29 October 2000 (2000-10-29), pages 847-850, XP010535125**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Field of Invention

The present invention relates to an adaptive multiuser interference canceller and a multiuser detector using the same, and in particular to an adaptive multiuser interference canceller and a multiuser detector extracting user signals from reception signals without a priori information on interference.

Background Art

Since frequency band in the air is limited property for human, techniques that can improve frequency utilization efficiency in radio communication or broadcasting systems are very important. Among the many systems utilizing the radio frequency band, in particular cellular mobile communication systems are occupying huge frequency bands with a rapidly growing number of subscribers.

In view of this, a reduction of a reuse factor is one straight forward approach to improve frequency utilization efficiency in cellular mobile communication systems. Unfortunately, signals of different users interfere with a decreasing reuse factor.

Therefore, interference cancellation techniques will become essential in 4th generation mobile communication systems. E.g., multistage interference cancellers have been proposed for code division multiple access CDMA mobile communication systems and their performance was confirmed through hardware experiments. However, these techniques take advantage of a priori information such as a user code and/or pilot signals.

In contrast to that, so-called blind seperation techniques - e.g., a constant modulus CM array - enable to distinguish one user signal from another user signal without a priori information. Since it is impossible to obtain complete a priori information on interference in commercial mobile communication systems, blind seperation techniques are useful for removing unknown interference which can not be mitigated by information cancellers requiring a priori information.

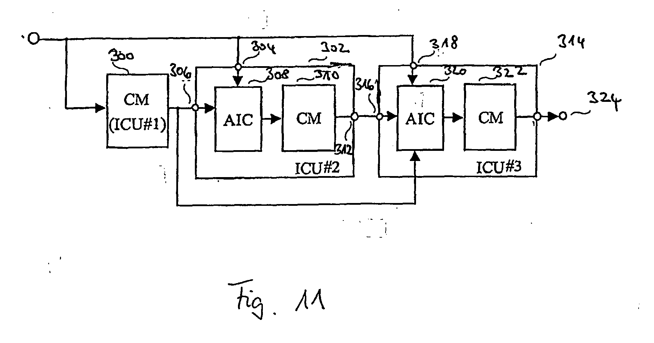

Fig. 11 shows a schematic diagram of a constant modulus CM array according to the prior art, in particular a constant modulus CM array which has three stages on interference cancellers.

As shown in Fig. 11, received signals from antenna elements are fed to a constant modulus CM array 300 as first stage interference canceller where only one signal coming from one user is extracted from the received signals. Since a constant modulus algorithm controls the constant modulus CM array 300 to extract a user signal with respect to only one user without any known a priori information on interference - e.g., a sequence - the constant modulus CM array will output only an extracted signal with respect to one user.

As shown in Fig. 11, the output signal of the constant modulus CM array 300 or equivalently the first stage interference cancelling unit and further received signals are forwarded to a second stage interference cancelling unit 302 via input terminals 304 and 306. In the interference cancelling unit 302 the user signal being extracted by the first stage interference cancelling unit 300 is removed from the received signals through an adaptive interference canceller 308. In addition, another user signal is extracted using the output of the adaptive interference canceller 308 in a further constant modulus CM array 310 for subsequent output via output terminal 312.

As shown in Fig. 11, the output signal from the second interference cancelling unit 302 and received signals are received at a third interference cancelling unit 314 via input terminals 316 and 318, respectively. As in the second interference cancellion unit 302, also in the third interference cancelling unit 314 previously extracted user signals are removed from the received signals by the adaptive interference canceller 320. The output signal of the adaptive interference canceller 320 is forwarded to the constant modulus CM array 322 for extraction of a further user signal which will be output at output terminal 324.

According to the approach shown in Fig. 11, interference signals are removed in adaptive interference cancellers before exctration of user signals in related constant modulus CM arrays. Therefore, the constant modulus CM array in the later stage interference cancelling unit ICU will extract user signals from input signals with high signal to interference and noise ratio SINR.

To the contrary, the constant moduls array(s) at early stage interference cancelling unit(s) ICU will extract user signals from input signals with low signal to interference and noise ratio SINR. For this reason, the user signal extracted in early stage interference cancelling unit will have low reliability so that the performance of the multiuser detector is degraded.

The document "Multiuser detection using CMA and the cancellation method in fast-fading channels", by Sun Jin Yeom and Yong Wan Park, 52nd Vehicular Technology Conference Fall 2000, IEEE VTS Fall, Cat. No.00CH37152, Boston, MA, USA, 24-28 Sept. 2000, ISBN 0-7803-6507-0, vol.6, pages 2844 - 2848, discloses a modified interference cancellation scheme for multi-user detection in DS/CDMA according to the preamble of claim 1 of the present application.The adaptive detector achieves good performance using the adaptive filter conducted iteration algorithm, but it requires many iterations for convergence. To resolve those problems, it proposes a new hybrid interference cancellation scheme combining the adaptive filter using CMA (constant modulus algorithm) and the cancellation method.

The document "A blind interference canceller in DS-CDMA", by K. Abed-Meraim, S. Attallah, T. J. Lim, and M. O. Damen, IEEE Conference Proceedings Article 2000-10-29, vol. 2, pages 847-850, proposes an interference cancellation scheme for the downlink CDMA where only the signature of the user of interest is known. The spreading sequences of the interfering users can be estimated by exploiting their constant modulus property. It considers a single-path synchronous CDMA system and propose a Jacobi-like blind algorithm to estimate the unknown signatures. They are used first to estimate a set of subspace-based MMSE detectors of the interfering users and then to perform parallel or sequential interference cancellation.

Summary of Invention

In view of the above, the object of the present invention is to provide blind receiving schemes achieving higher transmission performance.

According to a first aspect of the present invention this object is achieved through an adaptive multiuser interference canceller for use in a multiuser detector extracting user signals from reception signals without a priori information on interference. The adaptive multiuser interference canceller comprises at least two interference cancelling units adapted to receive related user signals extracted from reception signals and to improve reliabilty of the extracted user signals. Further each interference cancelling unit comprises an adaptive interference canceller adapted to determine a replica of interference for a related user signal and to remove the interference from the related user signal and an adaptive decoder adapted to receive an output signal from the adaptive interference canceller and to decode an extracted user signal with improved reliability from the output signal. Acording to the present invention it is proposed to use a correlation measure between different extracted user signals with improved reliability as indication of interference beteen dif-ferent extracted user signals for control of the interference cancelling units.

An important advantage of the adaptive multiuser interference canceller is that it may operated fully bling, i.e. without any knowledge of a priori information on interference. This achieved on the basis of the insight that a correlation measure between different extracted user signals is an appropriate indication of interference between different users. In other words, a higher value of correlation is an indication of related higher interference and vice vera.

According to a preferred embodiment of the first aspect of the present invention it is proposed to use adaptive algorithms for the estimation of correlation values, in particular a correlation based adaptive algorithm with improved convergence. Preferably, a stepsize parameter for the adaptive algorithm is controlled by correlations between different user signals.

According to a second aspect of the present invention the object outlined above is achieved through a multiuser detector extracting user signals from reception signals without a priori information on interference. The multiuser detector comprises a first multiuser adaptive interference canceller stage adapted to extract user signals from the reception sginals and comprising a plurality of cascaded interference cancelling units. The first interference cancelling unit in the cascade extracts a first user signal from received signals using a constant modulus algorithm. Further, interference cancelling units in the cascade extract further user signals from the received signals by removing previously determined user signals from the received signals and by subsequent signal extraction with respect to the further user signals.

According to the present invention it is proposed to cascade at least one further adaptive multiuser interference canceller stage as described above - i.e., an adaptive multiuser interference canceller using correlations between user signals for estimation of interference - to the first stage multiuser adaptive interference canceller. This further adaptive multiuser interference canceller receives the user signals extracted by a preceeding adaptive multiuser interference canceller and improves reliability of the user signals using a correlation measure between different extracted user signals as indication of interference between the extracted user signals for control of the further adaptive multiuser interference canceller.

The multiuser detector according to the present invention never uses a priori information, e.g., user codes. The document "A blind interference canceller in DS-CDMA", by K. Abed-Meraim, S. Attallah, T. J. Lim, and M. O. Damen, IEEE Conference Proceedings Article 2000-10-29, vol. 2, pages 847-850 discloses such a detector for the detection of one single user in the presence of interfering users, the signature of which is unknown. The present invention therefore achieves a big extension over known solutions. Further, though appropriate selection of the number of stages in the multiuser detector it is possible to achieve a desired signal to interference and noise ratio SINR at the receiver side.

According to yet another preferred embodiment of the present invention there is provided a computer program product directly loadable into the internal memory of an adaptive multiuser interference canceller comprising software code portions for performing the steps of the inventive interference cancellation when the product is run on a processor of the adaptive multiuser interference canceller.

Therefore, the present invention is also provided to achieve an implementation of the invention on computer or processor systems. In conclusion, such implementation leads to the provision of computer program products for use with a computer system or more specifically a processor comprised, e.g., in a adaptive multiuser interference canceller.

The programs defining the function of the present invention can be delivered to a computer/processor in many forms, including, but not limited to information permanently stored on non-writeable storage media, e.g., read only memory devices such as ROM or CD ROM discs readable by processors or computer I/O attachments; information stored on writable storage media, i.e. floppy discs and hard drives; or information convey to a computer/processor through communication media such as local area network and/or telephone networks and/or Internet or other interface devices. It should be understood, that such media when carrying processor readable instructions implementing the inventive concept represent alternate embodiments of the present invention.

Description of Drawing

In the following the best mode and preferred embodiments of the present invention will be explained with reference to the drawing in which:

Fig 1 shows a schematic diagram of a multiuser detector according to the present invention;

Fig. 2 shows a schematic diagram of an adaptive multiuser interference canceller according to the present invention;

Fig. 3 shows a schematic diagram of a first embodiment of the interference cancelling unit according to the present invention;

Fig. 4 shows a further detailed schematic diagram of the first embodiment of the interference cancelling unit as shown in Fig. 3;

Fig. 5 shows a schematic diagram of a second embodiment of the interference cancelling unit according to the present invention;

Fig. 6 shows a further detailed schematic diagram of the second embodiment of the interference cancelling unit as shown in Fig. 5;

Fig. 7 shows a further detailed schematic diagram a tapped delay line shown in Fig. 6;

Fig. 8 shows a schematic diagram of a third embodiment of the interference cancelling unit according to the present invention;

Fig. 9 shows a diagram illustrating bit error rate BER versus number of iterrations for interference cancellation and multiuser detection according to the present invention;

Fig. 10 shows a diagram illustrating bit error rate BER versus carrier to noise ratio CNR according to the present invention; and

Fig. 11 shows a schematic diagram of a constant modulus CM array.

Description of Best Mode and Preferred Embodiments

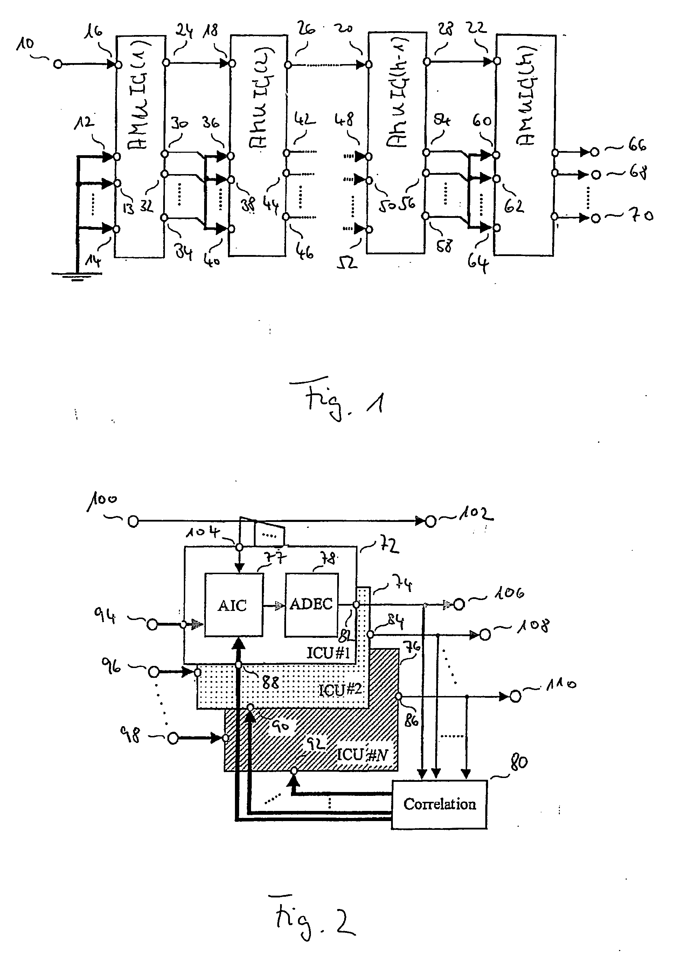

Fig. 1 shows a schematic diagram of a multiuser detector according to the present invention.
As shown in Fig. 1, the multiuser detector extracts user signals from reception signals without a priori information on interference and comprises a plurality of adaptive multiuser interference cancellers stages AMUIC(1), ..., AMUIC(M) also referred to as adaptive multiuser interference cancellers in the following.
As shown in Fig. 1, a first adaptive multiuser interference canceller stage AMUIC(1) extracts user signals from the reception signals. According to the present invention it is proposed that the first adaptive multiuser interference canceller stage has a structure as shown in Fig. 11 and explained above, which explanation is not repeated here.
As shown in Fig. 1, the multiuser detector also comprises further stages of adaptive multiuser interference cancellers AMUIC (2), ..., AMUIC(M) cascaded to the first stage adaptive multiuser interference canceller AMUIC(1). Operatively, each adaptive multiuser interference canceller stages AMUIC (2), ..., AMUIC(M) receives the user signals extracted by the related preceeding adaptive multiuser interference canceller AMUIC (1), ..., AMUIC(M-1) to improve reliability of the user signals.
In particular, according to the present invention it is proposed to use a correlation measure between different extracted user signals as indication of interference between the extracted user signals for control of the further multiuser adaptive interference canceller.

As shown in Fig. 1, an array antenna is assumed to be installed and signals received at the array antenna are fed to the input terminal 10. As outlined above, the first adaptive multiuser interference canceller has a struture as shown in Fig. 11 and as described above. The reason for this is that at the inital stage of interference cancellation no extracted user signal are available at input terminals 12-14.

As shown in Fig. 1, received signals are forwarded to each adaptive multiuser interference canceller via input terminals 16-22 and related output terminals 24-28, respectively. Therefore received signals are available at each of the adaptive multiuser interference cancellers.

On the other hand, extracted signals from the first stage are available through output terminals 30-34 and forwarded to the second adaptive multiple user interference canceller via related input terminals 36-40. Similar exchange of information being related to extracted user signals for subsequent adaptive multiuser interference cancellers is achieved via further pairs of output and input terminals 42-46 and 48-52 as well as 54-58 and 60-64, respectively. The final result of user signal extraction achieved by the multiuser detector is available at output terminals 66-70.

In view of extracted user signals from the first adaptive multiuser interference canceller the second stage adaptive multiuser interference canceller can extract user signals with higher reliability because the signal to interference and noise ratio SINR of input signals forwarded to the second adaptive multiuser interference canceler is improved through operation of the first adaptive multiuser interferece canceller.

Therefore, according to the present invention the reliability of extracted user signals may be improved with increasing number of stages of adaptive multiuser interference cancellers. In other words, the multiuser detector shown in Fig. 1 improves transmission performance over channels in the presence of interference.

Fig. 2 shows a schematic diagram of an adaptive multiuser interference canceller according to the present invention or in other words of one stage of the multiuser detector shown in Fig. 1.

As shown in Fig. 2, the adaptive multiuser interference canceller for use in a multiuser detector is adapted to extract user signals from reception signals without a priori information on interference. The adaptive multiuser interference canceller comprises a plurality of interference cancelling units 72-76 adapted to receive related user signals extracted from reception signals and to improve reliabilty of the extacted user signals.

As shown in Fig. 2, each of the interference cancelling units 72-76 comprises an adaptive interference canceller 77 and an adaptive decoder 78. There is provided correlation measurement unit 80 receiving output signals of the interference cancelling units via related output terminals 82-86. The correlation measurement unit 80 is further connected to the different interference cancelling unit via related input terminals 88-92.

Further, input terminals 94-98 are provided for input of extracted user signals from a previous stage of adaptive multiuser interference canceller. The input terminal 100 and the output terminal 102 are provided for exchange of received signals between different stages of adaptive multiuser interference cancellers while the input terminal 106 is provided for input of received signals to the interference cancelling units of the adaptive multiuser interference canceller shown in Fig. 2. Furter, the output terminals 106-110 are provided for forwarding the user signals extracted in the adaptive multiuser interference canceller stage shown in Fig. 2.

Operatively, each adaptive interference canceller determines a replica of interference for a related user signal and removes the interference from the related user signal. The adaptive decoder receives an output signal from the adaptive interference canceller and decodes an extracted user signal with improved reliability from the received output signal.

Further, the correlation unit generates a correlation measure between different extracted user signals with improved reliability which is then used as indication of interference beteen different extracted user signals for control of the interference cancelling units. As will be explained in more detail in the following, based on the correlation between the extracted signals the control of the interference cancelling units is achieved.

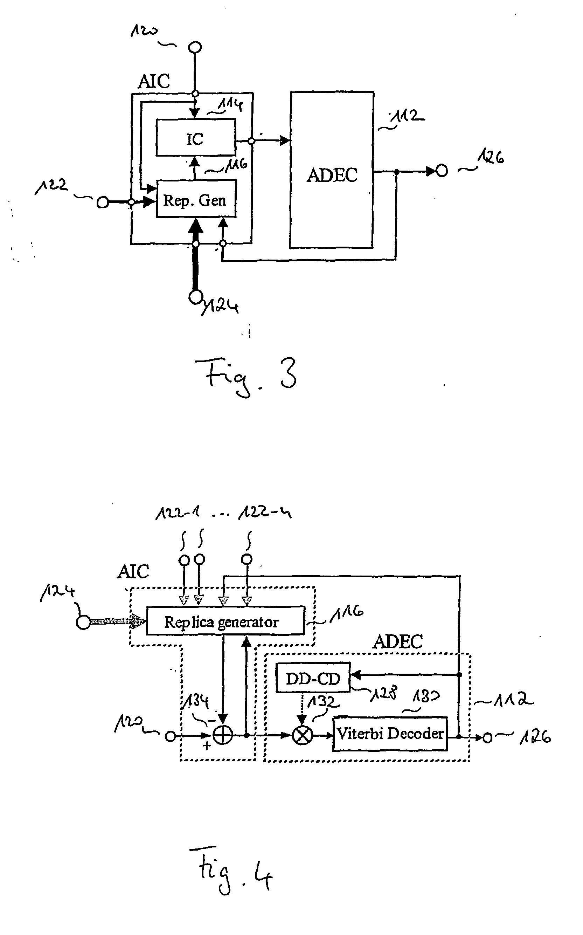

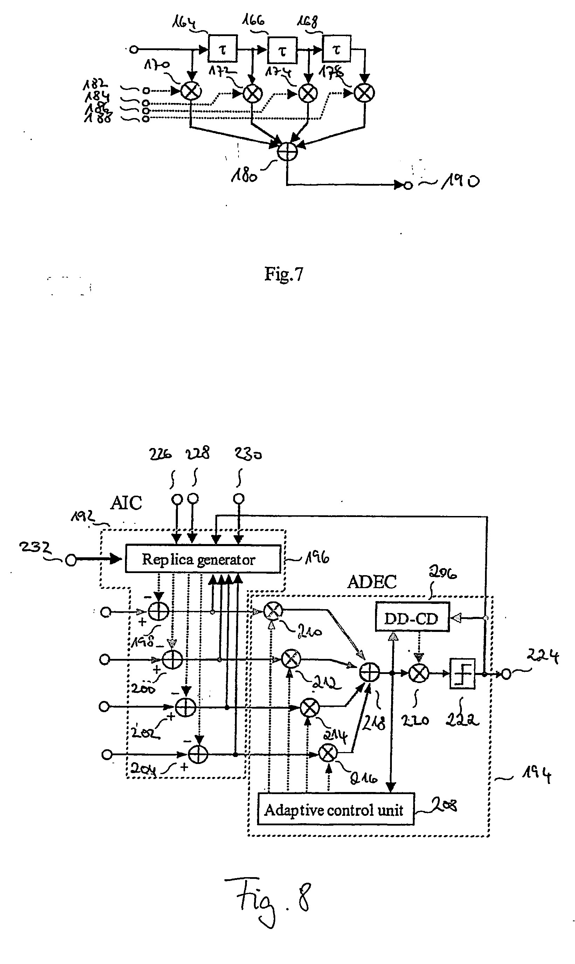

In the following different embodiments of interference cancelling units according to the present invention will be explained with respect to Fig. 3 to 8. Here, embodiments shown in Fig. 3 to 7 are adpated to operate in the temporal domain and the embodiment shown in Fig. 8 is adapted to operate in the spacial domain.

Fig. 3 shows a schematic diagram of a first embodiment of an interference cancelling unit according to the present invention.

As shown in Fig. 3, the first embodiment of the interference cancelling unit according to the present invention comprises an adaptive decoder 112, an interference canceller 114, and a replica generator 116.

Operatively, received signals are fed to the interference canceller 114 through input terminal 120. On the other hand, extracted signals and correlation information are provided to the replica generator 116 via input terminals 122 and 124, respectively. In addition, received signals are fed to the replica generator 116.

Operatively, in the replica generator 116 replicas of interference are generated through utilizing the input information in a way which will be explained in more detail in the following. The replica is then output to the interference canceller 114 which operatively subtracts the output signals of the replica generator 114 from the received signals. The substraction result contains essentially only one user signal which is then forwarded to the adaptive decoder 112.

Operatively, the adaptive decoder 112 decodes the output signal of the interference canceller 114 and outputs information with respect to a single user to the output terminal 126. As shown in Fig. 3, the output generated through the adaptive decoder 112 is fed back to the replica generator 116 in order to distiguish information with respect to one user from interference with respect to other users.

Fig. 4 shows a further detailed schematic diagram of the first embodiment of the interference cancelling unit as shown in Fig. 3.

As shown in Fig. 4, the adaptive decoder comprises a decision directed coherent detector 128, a viterbi type decoder 130, and a multiplier 132. Also, the interference canceller shown in Fig. 3 is realized as substractor 134.

Operatively, the received signal coming from input terminal is fed to the subtractor 134 of the adaptive interference canceller. Further, extracted user signals from a previous stage of adaptive multiuser interference cancellation are input via input terminals 122-1 to 122-n and correlation information is input via input terminal 124 to the replica generator 116.

In the replica generator 116 channel impulse responses of the extracted user signals are estimated. Further, these channel impulse responses are multiplied/convolved with the extracted user signals. The result are replicas of interference which is fed to the substractor 134. The substractor 134 removes the replicas of interference from received results and forwards the corresponding residual signals to the adaptive decoder 112.

In the adaptive decoder initally the received residual signals are coherent detected, i.e. phase rotated through operation of the multiplier 132 and then forwarded to the Viterbi decoder 130. The Viterbi decoder 130 then generates the output signal of the interference cancelling unit. In should be noted that phase rotation is achieved through operation of the decision directed coherent detector which receives the output signal of the Viterbi decoder 130 for calculation of phase rotation coefficients, as will be explained in more detail in the following.

According to the first embodiment of the interference cancelling unit as shown in Fig. 3 and 4 only the adaptive interference controller is controlled using correlation information as the adaptive decoder does not have any unit adaptive to environment.

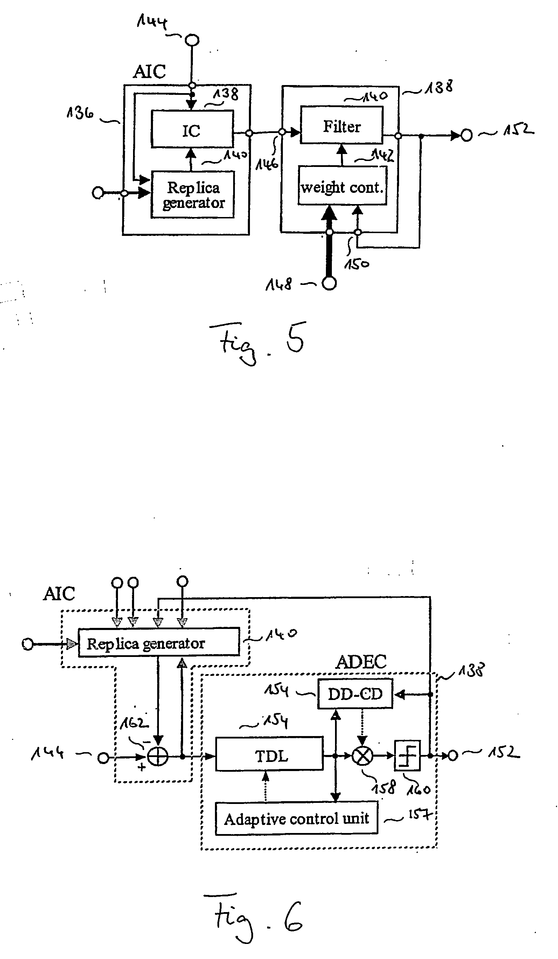

Fig. 5 shows a schematic diagram of a second embodiment of the interference cancelling unit according to the present invention allowing for correlation information based adaptive control of an adaptive controller.

As shown in Fig. 5, the adaptive interference canceller 136 comprises an interference canceller 138 and a replica generator 140. Further, the adaptive decoder 139 comprises a filter 141 and a filter weight control unit 142.

Operatively, correlation information is fed back to the adaptive decoder 139. In addition, extracted signals are provided to the replica generator 140 via an input terminal 144 of the adaptive interference canceller. The replica generator 140 generates estimates of impulse responses with respect to extracted user signals and also performs convolution of the extracted signals with the channel impulse response.

The results - i.e., the replicas - are fed to the interference canceller 138 where the replicas are subtracted from the received signals. The difference is then forwarded to the filter 141 through input terminal 146.

On the other hand, the correlation information and the filter output signal are forwarded to the weight control device 142 via input terminals 148 and 150, respectively. In the weight control device 142 the optimal filter tap weights are calculated taking the correlation information into account. The filter tap weight is fed to the filter 141 and the filter output is available at output terminal 152.

Fig. 6 shows a further detailed schematic diagram of the second embodiment of the interference cancelling unit as shown in Fig. 5.

As shown in Fig. 6, the adaptive decoder 139 comprises a decision directed coherent detector 154, a tapped delay line 156, an adaptive control unit 157, a multiplier 158, and a slicer 160. Further, the interference canceller is implemented as subtractor 162.

Operatively, extracted signals and correlation information are forwarded to the replica generator 140 in the adaptive interference canceller. The result of replica is forwarded to the subtractor 162 where replicas are subtracted from input signals comming from input terminal 144. The output signal of the subtractor is then fed to the tapped delay line 156 in the adaptive decoder 138.

Further, in the adaptive delay line 156 the input signal is adaptively filtered using tap coefficients supplied through the adaptive control unit 157. The output of the tapped delay line 156 if forwarded to the multiplier 158 so that the output of the tapped delay line 156 is multiplied with an output of the decision directed coherent detector 154 for phase recovery or in other words coherent detection. The output of the multiplier 158 is fed to the slicer 160 which is adapted to achieve the following functionality:

$$sgn(\alpha) = \left\{ \begin{array}{ll} 1 & \alpha \geq 0 \\ -1 & \alpha < 0 \end{array} \right. \qquad (1)$$

Fig. 7 shows a further detailed schematic diagram a tapped delay line shown in Fig. 6.

As shown in Fig. 7, the tapped delay line comprises at least one delay unit 164-168, where different delay units are connected in series, at least one multiplier 170-178 provided at input and output sides of the delay units 164-168, and an adder 180 connected to the outputs of the multipliers. Multiplication coefficients may be forwarded to the multipliers via input terminals 182-188.

Operatively, the input of delay unit 164 and the outputs of delay units 164-168 are provided to multipliers 170-178, respectively. The multiplier outputs are summed by the adder 180, and the result is forwarded to the output terminal 190 of the tapped delay line.

While above, embodiments of the adaptive interference canceller for operation in the termporal domain have been described, in the following an embodiment of the adaptive interference canceller being related to spatial signal processing will be described.

Fig. 8 shows a schematic diagram of a third embodiment of the interference cancelling unit according to the present invention being related to spatial signal processing.

As shown in Fig. 8, the third embodiment of the adaptive interference cancelling unit comprises an adaptive interference canceller 192 and an adaptive decoder 194. The adaptive interference canceller 192 comprises a replica generator 196 and an interference canceller having a plurality of subtractors 198-204.

As shown in Fig. 8, the adaptive decoder comprises a decision directed decoder 206, an adaptive control unit 208, and a processing unit adapted to calculate a decoded output. The processing unit comprises a plurality of multipliers 210-216, an adder 218 connected to the outputs of the multipliers, an multiplier 220 connected to the adder 218 and the decision directed coherent detector 206, and a slicer 222 connected to the multiplier 220 and an output terminal 224.

Operatively, the extracted signals from input terminals 226-230, the correlation information from input terminal 232, and the output signal of the slicer 222 are forwarded to the replica generator 196 in the adaptive interference canceller 192. Further, a signal vector - referred to as $S(k)$ in the following - received at antenna elements is forwarded to the subtractors 198-204. Here, replicas corresponding to elements in the signal vector are generated in the replica generator 196.

In the subtractors 198-204 replicas of interference are subtracted from the signal vector $S(k)$ to generate an output vector $S_{i,j}(k)$ which is output to the adaptive decoder. Here, $k$ represents an index of reception time, $i$ is an index according to a stage number in the multiuser detector where the interference cancelling unit as described in the following is used, and $j$ is an index of iteration with respect to operation of the interference cancelling unit.

As shown in Fig. 8, elements of the output vector $S_{i,j}(k)$ are forwarded to the multipliers 210-216 in the adaptive decoder 194. These multipliers 210-216 and the adder 218 provide a digital beam former being controlled by the adaptive control unit. Therefore, the beam former is adapted to extract an user signal from input signals with respect to only one user. Since interference is already removed if the replica generator provides an ideal replica of interference, the beam former only points the beam to the user but does not have a functionality with repect to interference.

Therefore, in this configuration the maximum beam can be obtained. The output of the adder - i.e., the beam former output - is forwarded to a coherent detector being composed of the decision directed coherent detector 206, the multiplier 220, and the slicer 222. Further, the output of the coherent detector - i.e., the output of the slicer 222 - is forwarded to the replica generator 196, to the decision directed coherent detector 206, and to the output terminal 224.

In the following further details and the structure of a correlation-based adaptive algorithm for interference cancellation according to the present invention will be explained.

Initially, the received signal $S(k)$ is forwarded to a first stage of the multiuser detector. The output signal of the first stage adaptive multiuser interference canceller $x_{1,1}(k)$ is represented according to

$$x_{1,1}(k) = W_{1,1}^H(k-1)S(k) \qquad (2)$$

wherein $W_{1,1}(k)$ denotes a weight vector and $H$ denotes the Hermetian transpose, both, of a vector and a matrix. It should be noted that the weight vector may be determined according to known algorithms, e.g., the constant modulus CM algorithm referred to above or the Godard algorithm.

While an adaptive multiuser interference canceller using a blind algorithm - e.g., a constant modulus array - can mitigate interference from the output signal $x_{1,1}(k)$ in a first iteration it does not achieve carrier recovery which is essential for coherent demodulation. Therefore, in order to achieve coherent demodulation the output signal should be phase recovered according to

$$y_{1,1}(k) = sgn(c_{1,1}^*(k-1) \cdot x_{1,1}(k)) \qquad (3)$$

Here, $c_{1,1}(k)$ indicates a phase shift obtain by a carrier recovery circuit of the decision directed coherent detector (not shown) and * denotes the conjugate complex.

As outlined above, each interference cancelling unit of the multiuser detector operates to cancel interference from the received signal using the output signal of the the adaptive decoders. In more detail, interference is estimated through operation of the replica generator according to

$$I_{i,j}(k) = T_{i,j}^H(k-1) \cdot \tilde{Y}_{i,j}(k) \qquad (4)$$

wherein

$i = 1,..., M$ is an index according to stage number of the adaptive multiuser interference canceller in a multiuser detector;

$j = 1,..., N$ is an index according to number of iteration within the adaptive multiuser interference canceller;

$k$ is an index of time with respect to received signals;

$I_{i,j}(k)$ is an interference matrix according to a current time of reception;

$T_{i,j}(k - 1)$ is a cancelling matrix according to a previous time of reception;

$\tilde{Y}_{i,j}(k)$ is defined according to

$$\tilde{Y}_{i,j}(k) = [y_{i,1}(k), \ldots, y_{i,j-1}(k), 0, y_{i-1,j+1}(k), \ldots, y_{i-1,N}(k)]^T \qquad (5)$$

with $y_{i,j}(k)$ as phase recovered output signal at adaptive multiuser interference canceller stage $i$ and iteration $j$.

In more detail, phase recovery is achieved by setting $y_{i-1,j}(k)$ to zero and by determining the remaining values according to

$$y_{i,j}(k) = sgn(c_{i,j}(k-1) \cdot W_{i,j}^H(k-1) \cdot S_{i,j}(k)) \qquad (6)$$

Further, to remove interference the interference canceller operates according to

$$S_{i,j}(k) = S(k) - I_{i,j}(k) \qquad (7)$$

wherein

$S_{i,j}(k)$ is the output of the adaptive interference canceller according to reception time index $k$ and $S(k)$ is the signal vector corresponding to the received signal.

It should be noted that slicer output signal $y_{i,j}(k)$ is generated from interference canceller output vector $S_{i,j}(k)$, whereas slicer output signal $y_{1,1}(k)$ is generated from the received vector. Because the extracted signals from the first stage adaptive multiuser interference canceller are different from each other, the canceling matrix is set up from impulse response vectors with respect to extracted users as column vectors.

Next, the received signal replica vector except for the signal component corresponding to $y_j(k)$ is generated. Subtracting the replica vector from the received signal vector the signal component corresponding to $y_j(k)$ is only left in vector $S_{i,j}(k)$ in addition to the noise component.

Therefore, the next stage adaptive multiuser interference canceller can point the beam with the maximum gain to the desired signal $y_j(k)$ since the other signals are removed from the input vector. In conclusion, the multiuser detector has the gain for each user compared with conventional constant modulus CM array.

It should be noted that adaptive algorithms for interference cancellation are important when the multiuser detector is applied to mobile communication systems, in particular adaptive algorithms that simultaneously control weight vectors and canceling matrices. Since modulation schemes with constant modulus such as BPSK and QPSK are assumed to be applied constant modulus algorithm CMA seems promising for a blind adaptive algorithm.

On the other hand, the blind algorithm hardly estimates the cancelling matrix as the constant modulus algorithm can neither estimate the phase nor the amplitude of the signal component included in the received vector. Indeed, only the relationship of phase and amplitude among different signal components is obtained using the constant modulus algorithm CMA,while absolute phase and amplitude are required for the interference cancellation.

Contrary to the blind algorithm, adaptive algorithms based on the driterion of minimized mean squared error MMSE are regarded useful within the framework of the present invention. The reason for this is that these algorithms can estimate, both, absolute phase and amplitude simultaneously.

Further, since adaptive algorithms based on minimized mean squared error MMSE attain optimum estimates in terms of signal to interference and noise ratios SINR in communication channels collapsed by additive white Gaussian noise AWGN and co-channel interference, moreover, they can essentially keep the signal to interference and noise ratio SINR of the signal in every stage of the multiuser dtector. Hence, the signal to interference and noise ratio hardly degrades in any stage of the multiuse detector though the number of stages increases when algorithms based on minimized mean squared error MMSE are applied within the multiuser detector.

It should be noted that interference cancellation based on algorithms relying solely on minimized mean squared error MMSE cannot mitigate interference if a data stream from slicers in an adaptive interference cancelling unit is same to that in another interference cancelling unit of the same stage of adaptive multiuser interference cancellation.

In this case, the channel impulse response vector for the stream is divided into the number of slicers outputting the stream. Hence, some channel impulse response component of the stream is cancelled and the residual is fed to the adaptive multiuser interference cancellers. This happens in more than two stages of the multiuser detector. In this case, interference to be removed is fed to the adaptive multiuser interference cancelling units. This means, that the expected antenna gain is lost, as the number of signals extracted in the multiuser detector decreases.

In order to solve the problem outlined above, according to the present invention there is proposed an adaptive algorithm where the correlation between extracted signals is applied to control the adaptive interference cancelling units. It should be noted that the adaptive algorithm as explained in the following is implemented into the adaptive control unit 208 shown in Fig. 8.

As explained above, adaptive algorithms being based on minimized mean squared error MMSE are preferred for the estimation of a channel impulse response. For the first step of derivation of the estimate, an estimation error denoted by $e_{i,j}(k)$, $i = 1,..., M, j = 1,..., N$ is defined according to

$$e_{i,j}(k) = S(k) - T_{i,j}^H(k-1) \cdot Y_{i,j}(k). \qquad (8)$$

Further, according to the principle of a stochastic gradient descent method, a vector update equation is derived according to

$$T_{i,j}(k) = T_{i,j}(k-1) - \Phi_{i,j}(k) \cdot e_{i,j}^*(k) \cdot Y_{i,j}(k) \qquad (9)$$

In this equation $\Phi_{i,j}(k)$ is a stepsize function controlling the convergence rate and $Y_{i,j}(k)$ is defined according to

$$Y_{i,j}(k) = [y_{i,1}(k), \ldots, y_{i,j-1}(k), y_{i,j}(k), y_{i-1,j+1}(k), \ldots, y_{i-1,N}(k)] \qquad (10)$$

When $\Phi_{i,j}(k)$ is set to a constant the algorithm will be a LMS algorithm. In accordance with the present invention $\Phi_{i,j}(k)$ is determined according to

$$\Phi_{i,j}(k) = \frac{\mu}{p} diag\left[\Phi_{i,1}(k), \Phi_{i,2}(k), \ldots, \Phi_{i,j}(k), \Phi_{i-1,j+1}(k), \ldots, \Phi_{i-1,N}(k)\right] \qquad (11)$$

where $diag[V]$ is a diagonal matrix whose elements are elements of the vector $V$. In addition, the diagonal elements in $\Phi_{i,j}(k)$ are defined according to

$$\Phi_{i,l}(k) = \begin{cases} (1-\alpha) \cdot \Phi_{i,l}(k) + \alpha \cdot \Delta\Phi_{i,l}(k) & l \neq 1 \\ 1 & l = 1 \end{cases} \quad . \qquad (12)$$

Here, the autoregressive equation is considered as one tap infinite impulse response IIR filter with $\alpha(1 - (1 - \alpha) z)^{-1}$ as transfer function in the $z$-plane. The input signal to the filter is defined according to

$$\Delta\Phi_{i,l}(k) = \prod_{h=1}^{K} (1 - \rho_{i,l,h}(k)) \qquad (13)$$

where $\rho_{i,l,h}(k)$ denotes the correlation between the output signals of the $l$-th and $h$-th slicer. According to the present invention this correlation is defined according to

$$\rho_{i,l,h}(k) = \begin{cases} \dfrac{\sum_{n=1}^{k} \beta^{k-n} |y_{i-1,l}^{*}(n) y_{i,h}(n)|}{\sum_{n=1}^{k} \beta^{k-n} |y_{i,l}^{*}(n)||y_{i,h}(n)|} & h \leq l \\ \dfrac{\sum_{n=1}^{k} \beta^{k-n} |y_{i,l}^{*}(n) y_{i,h}(n)|}{\sum_{n=1}^{k} \beta^{k-n} |y_{i,l}^{*}(n)||y_{i,h}(n)|} & h > l \end{cases} \qquad (14)$$

In the the equation defining the correlation value, $\beta$ is a so-called forgetting factor introduced in order to track a change of mobile communication channels. Since $\rho_{i,l,h}(k)$ is obtained using a deterministic algorithm $\rho_{i,l,h}(k)$ immediately comes close to its ensemble average. However, $\rho_{i,l,h}(k)$ is changing according to a correlation pattern of the sequences due to the introduction of the forgetting factor $\beta$.

Hence, it is dispensable to smooth $\rho_{i,l,h}(k)$ for obtaining a stable operation of the multiuser detector. This is the reason why the infinite impulse response IIR filer is applied in equation (12). In principle, a constant modulus algorithm CMA without any constraint makes all the interference cancelling unit extract an identical user signal at the beginning of iteration or convergence, since the input vector to each interference cancelling unit is the same as the received vector $S(k)$.

In other words, the same data streams are outputted by all slicers at the beginning of convergence. Therefore, most of the tap elements need not to be updated since improper signals are fed to interference cancelling units.

However, since the output signal of the interference cancelling unit fed with $S(k)$ is exceptionally correct the related tap elements in the interference cancelling units should be updated. This is the reason why $\Phi_{i,j}(k)$ is set to a value of 1. Taking the above into account, initial conditions are determined according to

$$\Phi_{i,l}(0) = \begin{cases} 1 & l = 1 \\ 0 & l \neq 1 \end{cases} \quad i = 1, \ldots, N, \quad l, h = 1, \ldots, M \qquad (15)$$

$$\rho_{i,l,h}(0) = 0, \quad c_{i,j}(0) = 1 + j \cdot 0 \quad i = 1, \ldots, N, \quad l, h = 1, \ldots, M \qquad (16)$$

Further, the coherent detector shown in Fig. 8 is based on a linear estimation scheme as the frequency offset is not taken into account. In more detail, for the coherent detection an LMS algorithm is applied according to

$$c_{i,j}(k) = c_{i,j}(k-1) - \mu(y_{i,j}(k) - x_{i,j}(k))^{*} \cdot x_{i,j}(k) \qquad (17)$$

Assuming that the multiuser detector would be linear the control of stepsize in equation (15) is equivalent to that of equation (10). On the other hand, a multiuser detector with nonlinear operation should use the correlation based algorithm as described for the interference cancelling units to achieve superior performance over linear systems.

In conclusion, the adaptive algorithm for controlling the cancelling matrix relies on step according to equations (8) to (15). Further, also tap weights are adaptively controlled, e.g., according to the constant modulus algorithm CMA or the Godard algorithm, as outlined above. Further, it should be noted that the explanations given above equally apply to interference cancellation in the temporal domain and may be easily extended to linear multiuser detectors, e.g., detectors without slicers.

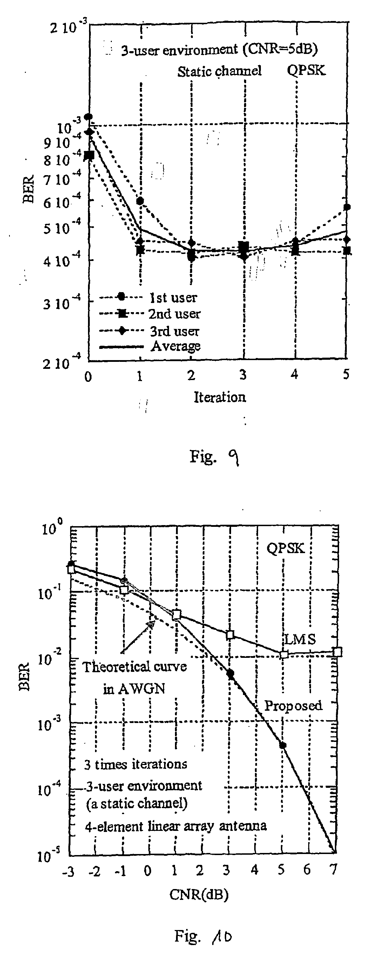

Fig. 9 shows a diagram illustrating bit error rate BER versus number of iterations for interference cancellation and multiuser detection according to the present invention;

For the results shown in Fig. 9, the performance of the multiuser detector has been verified in a statistical co-channel interference environment assuming the following system parameters: three users share a frequency band and are assumed to be synchronzied to each other. This scenario is comparable to a situation of multiple input multiple output MIMO systems where three transmission antennas are installed. Further, it is assumed that quadrature phase shift keying is applied as modulation scheme. Here, as the mobile communication system is assumed to be blind, differential encoding is applied in order to remove the ambiguity for the demodulated signal.

Also, sampling is carried out optimally and a four element linear array antenna is applied for the receiver. The distance between adjacent antenna elements is $0.5 \cdot \lambda$, where $\lambda$ denotes the radio wavelength. Assuming the bore site is referred to as 0 degree direction, the three user signals impinge on the linear array antennas in directions of 30, 0, -45 degrees, respectively. The received power is the same for the differnt users.

Fig. 10 shows a diagram illustrating bit error rate BER versus carrier to noise ratio CNR according to the present invention.

For the diagram shown in Fig. 10, the carrier to noise ratio is 5dB. In addition to the bit error rate BER performance of each user also the average value is shown. For reasons of interpretation, also the theoretical performance of quadrature phase shift keying with differential encoding and an average gaussian white noise AWGN channel is shown. Still further, the performance of a multiuser detector being operated with a LMS algorithm is shown as additional reference.

As can be seen from Fig. 9 and 10, the multiuser detector according to the present invention which is operated iteratively attains a significantly improved performance over previously known approaches without iterations.

As can be seen from Fig. 9, the bit error rate of the multiuser detector is reduced by a factor of two with one iteration. Further the average curve becomes flat from two to four iterations. From this, the conclusion that the number of required iterations is at most four seems justified.

As can be seen from Fig. 10, three iterations are applied for each type of multiuser detector, i.e. according to theoretical performance, to LMS based performance, and according to the present invention. While the multiuser decoder using the LMS algorithm for the interference canceller has an irreducible bit error rate of $BER = 10^{-2}$, the multiuser detector using the correlation-based algorithm for the interference canceller archieves superior performance being almost the same as the theoretical optimum in average white gaussian noise AWGN.

**Claims**

1. Adaptive multiuser interference canceller for use in a multiuser detector adapted to extract user signals from reception signals without a priori information on interference, comprising:

   a) at least two interference cancelling units (72-76) adapted to receive related user signals extracted from reception signals and to improve reliabilty of the extracted user signals, wherein each interference cancelling unit comprises:

   a1) an adaptive interference canceller (77) adapted to determine a replica of interference for a related user signal and to remove the interference from the related user signal;
   a2) an adaptive decoder (78) adapted to receive an output signal from the adaptive interference canceller and to decode an extracted user signal with improved reliability from the output signal; **characterized in that**

   b) a correlation measure between different extracted user signals with improved reliability is used as indication of interference between different extracted user signals for control of the interference cancelling units.

2. Adaptive multiuser interference canceller according to claim 1, **characterized in that** the interference cancelling units are adapted to operate in the temporal domain.

3. Adaptive multiuser interference canceller according to claim 2, **characterized in that** the adaptive interference canceller in every interference cancelling unit comprises a replica generator adapted to generate a replica of interference and an interference canceller adapted to substract the output of the replica generator from an input signal of the adaptive interference canceller.

4. Adaptive multiuser interference canceller according to claim 3, **characterized in that** the correlation measure is fed back to the replica generator for control of the replica generator.

5. Adaptive multiuser interference canceller according to claim 2, **characterized in that** the adaptive decoder in every interference cancelling unit comprises a filter adapted to filter the output signal of the related adaptive interference canceller of the interference cancelling unit for output of a related extracted user signal and a weight control device adapted to control filter coefficients of the filter.

6. Adaptive multiuser interference canceller according to claim 5, **characterized in that** the correlation measure is fed back to the weight control unit for control of the weight.

7. Adaptive multiuser interference canceller according to claim 5 or 6, **characterized in that** the filter is a tapped delay line filter.

8. Adaptive multiuser interference canceller according to claim 1, **characterized in that** the interference cancelling units are adapted to operate in the spatial domain.

9. Adaptive multiuser interference canceller according to claim 8, **characterized in that** the adaptive interference canceller in every interference cancelling unit comprises a replica generator adapted to generate a replica of interference and an interference canceller adapted to substract the output of the replica generator from input signals of the adaptive interference canceller.

10. Adaptive multiuser interference canceller according to claim 4 or 9, **characterized in that** the replica generator is adapted generate the replica of interference according to

$$I_{i,j}(k) = T_{i,j}^{H}(k-1) \cdot \tilde{Y}_{i,j}(k)$$

wherein
$i = 1,..., M$ is an index according to stage number of the adaptive multiuser interference canceller in a multiuser detector;
$j = 1,..., N$ is an index according to number of iteration within the adaptive multiuser interference canceller;
$k$ is an index of time with respect to received signals;
H is a Hermetian transpose of a vector and a matrix, respectively;
$T_{i,j}(k$ - 1) is a cancelling matrix according to a previous time of reception;
$\tilde{Y}_{i,j}(k)$ is defined according to

$$\tilde{Y}_{i,j}(k) = [y_{i,1}(k), \ldots, y_{i,j-1}(k), 0, y_{i-1,j+1}(k), \ldots, y_{i-1,N}(k)]^{T}$$

with $y_{i,j}(k)$ as phase recovered output signal at adaptive multiuser interference canceller stage $i$ and iteration $j$.

11. Adaptive multiuser interference canceller according to claim 10, **characterized in that** the interference canceller is adapted to cancel interference according to

$$S_{i,j}(k) = S(k) - I_{i,j}(k)$$

wherein
$S_{i,j}(k)$ is the output of the adaptive interference canceller according to reception time index $k$; and
$S(k)$ is a signal vector corresponding to a received signal.

**12.** Adaptive multiuser interference canceller according to claim 10 or 11, **characterized in that** the adaptive decoder comprises a decision directed decoder adapted to determine a phase shift $c_{i,j}(k)$ of reception, an adaptive control unit adapted to determine a weight vector $W_{i,j}(k)$ for processing the output of the adaptive interference canceller according to a predetermined algorithm, and a processing unit adapted to calculate a decoded output according to

$$y_{i,j}(k) = sgn(c_{i,j}(k-1) \cdot W_{i,j}^H(k-1) \cdot S_{i,j}(k)).$$

**13.** Adaptive multiuser interference canceller according to claim 12, **characterized in that** the replica generator is adapted to determine the cancelling matrix by determing an estimation error according to

$$e_{i,j}(k) = S(k) - T_{i,j}^H(k-1) \cdot Y_{i,j}(k)$$

wherein

$$Y_{i,j}(k) = [y_{i,1}(k), \ldots, y_{i,j-1}(k), y_{i,j}(k), y_{i-1,j+1}(k), \ldots, y_{i-1,N}(k)]$$

and by executing a recursion according to

$$T_{i,j}(k) = T_{i,j}(k-1) - \Phi_{i,j}(k) \cdot e_{i,j}^*(k) \cdot Y_{i,j}(k)$$

wherein
* is the conjugate complex;
and $\Phi_{i,j}(k)$ is a step size function.

**14.** Adaptive multiuser interference canceller according to claim 13, **characterized in that** the replica generator is adapted to determine the step size function $\Phi_{i,j}(k)$ according to

$$\Phi_{i,j}(k) = \frac{\mu}{N} diag \left[\Phi_{i,1}(k), \Phi_{i,2}(k), \ldots, \Phi_{i,j}(k), \Phi_{i-1,j+1}(k), \ldots, \Phi_{i-1,N}(k)\right]$$

wherein
$\mu$ is a predetermined constant;
*diag* [*V*] is a diagonal matrix set up from vector elements of a vector *V*;
diagonal elements of $\Phi_{i,j}(k)$ are defined as outputs of an auto regressive filter according to

$$\Phi_{i,l}(k) = \begin{cases} (1-\alpha) \cdot \Phi_{i,l}(k) + \alpha \cdot \Delta\Phi_{i,l}(k) & l \neq 1 \\ 1 & l = 1 \end{cases}$$

and wherein

$$\Delta\Phi_{i,l}(k) = \prod_{h=1}^{K} (1 - \rho_{i,l,h}(k))$$

is the input to the auto regressive filter and $\rho_{i,l,h}(k)$ denotes the correlation between the output $l$-th and $h$-th interference cancelling unit.

15. Adaptive multiuser interference canceller according to claim 14, **characterized in that** the replica generator is adapted to determine the correlation between the output $l$-th and $h$-th interference cancelling unit according to

$$\rho_{i,l,h}(k) = \begin{cases} \dfrac{\sum_{n=1}^{k} \beta^{k-n}\left|y_{i-1,l}^{*}(n)y_{i,h}(n)\right|}{\sum_{n=1}^{k} \beta^{k-n}\left|y_{i,l}^{*}(n)\right|\left|y_{i,h}(n)\right|} & h \leq l \\ \dfrac{\sum_{n=1}^{k} \beta^{k-n}\left|y_{i,l}^{*}(n)y_{i,h}(n)\right|}{\sum_{n=1}^{k} \beta^{k-n}\left|y_{i,l}^{*}(n)\right|\left|y_{i,h}(n)\right|} & h > l \end{cases}$$

wherein
$\beta$ is a factor provided to track a change of a communication channel.

16. Adaptive multiuser interference canceller according to claim 15, **characterized in that** the replica generator is adapted to set intial values according to

$$\Phi_{i,l}(0) = \begin{cases} 1 & l = 1 \\ 0 & l \neq 1 \end{cases} \quad i = 1, \ldots, N, \quad l, h = 1, \ldots, M$$

and

$$\rho_{i,l,h}(0) = 0, \quad c_{i,j}(0) = 1 + j \cdot 0 \quad i = 1, \ldots, N, \quad l, h = 1, \ldots, M.$$

17. Multiuser detector adapted to extract user signals from reception signals without a priori information on interference, comprising:

  a) a first adaptive multiuser interference canceller stage adapted to extract user signals from the reception sginals and comprising a plurality of cascaded interference cancelling units; wherein

  a1) the first interference cancelling unit in the cascade is adapted to extract a first user signal from received signals using a constant modulus algorithm; and
  a2) further interference cancelling units in the cascade are adapted to extract further user signals from the received signals by removing previously determined user signals from the received signals and by subsequent signal extraction with respect to the further user signals;

  b) at least one further adaptive multiuser interference canceller stage according to one of the claims 1 to 16 being cascaded to the first stage adaptive multiuser interference canceller and adapted to receive the user signals extracted by a preceeding adaptive multiuser interference canceller and to improve reliability of the user signals using a correlation measure between different extracted user signals as indication of interference between the extracted user signals for control of the further adaptive multiuser interference canceller.

18. Method of adaptive multiuser interference cancellation in a multiuser detector for extracting user signals from reception signals without a priori information on interference, comprising the steps:

  a) receiving user signals extracted from reception signals for improvement of reliabilty;
  b) generating a replica of interference for the user signals;
  c) cancelling the interference from the user signals;
  d) decoding user signals with improved reliability from user signals with removed interference; **characterized in that**
  e) a correlation measure between different user signals is used as indication of interference between different user signals during interference cancellation.

**19.** Method of adaptive multiuser interference cancellation according to claim 18, **characterized in that** it is operated in the temporal domain.

**20.** Method of adaptive multiuser interference cancellation according to claim 18, **characterized in that** it is operated in the spatial domain.

**21.** Method of adaptive multiuser interference cancellation according to claim 20, **characterized in that** the replica of interference is generated according to

$$I_{i,j}(k) = T_{i,j}^H(k-1) \cdot \tilde{Y}_{i,j}(k)$$

wherein
$i = 1,..., M$ is an index according to stage number of the adaptive multiuser interference canceller in a multiuser detector;
$j = 1,..., N$ is an index according to number of iteration within the adaptive multiuser interference canceller;
$k$ is an index of time with respect to received signals;
$H$ is a Hermetian transpose of a vector and a matrix, respectively;
$T_{i,j}(k - 1)$ is a cancelling matrix according to a previous time of reception;
$\tilde{Y}_{i,j}(k)$ is defined according to

$$\tilde{Y}_{i,j}(k) = [y_{i,1}(k), \ldots, y_{i,j-1}(k), 0, y_{i-1,j+1}(k), \ldots, y_{i-1,N}(k)]^T$$

with $y_{i,j}(k)$ as phase recovered output signal at adaptive multiuser interference canceller stage $i$ and iteration $j$.

**22.** Method of adaptive multiuser interference cancellation according to claim 21, **characterized in that** interference is cancelled according to

$$S_{i,j}(k) = S(k) - I_{i,j}(k)$$

wherein
$S_{i,j}(k)$ is the output of the adaptive interference canceller according to reception time index $k$; and
$S(k)$ is a signal vector corresponding to a received signal.

**23.** Method of adaptive multiuser interference cancellation according to claim 21 or 22, **characterized in that** decoding user signals is achieved in a decision directed decoder according to the following steps:

determining a phase shift $c_{i,j}(k)$ of reception;
determining a weight vector $W_{i,j}(k)$ for processing the result interference cancellation according to a pre-determined algorithm; and
calculating a decoded output according to

$$y_{i,j}(k) = sgn(c_{i,j}(k-1) \cdot W_{i,j}^H(k-1) \cdot S_{i,j}(k)).$$

**24.** Method of adaptive multiuser interference cancellation according to claim 23, **characterized in that** the canceling matrix is set up by determining an estimation error according to

$$e_{i,j}(k) = S(k) - T_{i,j}^{H}(k-1) \cdot Y_{i,j}(k)$$

wherein

$$Y_{i,j}(k) = [y_{i,1}(k), \ldots, y_{i,j-1}(k), y_{i,j}(k), y_{i-1,j+1}(k), \ldots, y_{i-1,N}(k)]$$

and by executing a recursion according to

$$T_{i,j}(k) = T_{i,j}(k-1) - \Phi_{i,j}(k) \cdot e_{i,j}^{*}(k) \cdot Y_{i,j}(k)$$

wherein
* is the conjugate complex;
and $\Phi_{i,j}(k)$ is a step size function.

**25.** Method of adaptive multiuser interference cancellation according to claim 24, **characterized in that** the step size function $\Phi_{i,j}(k)$ is determined according to

$$\Phi_{i,j}(k) = \frac{\mu}{N} diag \left[\Phi_{i,1}(k), \Phi_{i,2}(k), \ldots, \Phi_{i,j}(k), \Phi_{i-1,j+1}(k), \ldots, \Phi_{i-1,N}(k)\right]$$

wherein
$\mu$ is a predetermined constant;
*diag* [*V*] is a diagonal matrix set up from vector elements of a vector *V*;
diagonal elements of $\Phi_{i,j}(k)$ are defined as outputs of an auto regressive filter according to

$$\Phi_{i,l}(k) = \begin{cases} (1-\alpha) \cdot \Phi_{i,l}(k) + \alpha \cdot \Delta\Phi_{i,l}(k) & l \neq 1 \\ 1 & l = 1 \end{cases}$$

and wherein

$$\Delta\Phi_{i,l}(k) = \prod_{h=1}^{K} (1 - \rho_{i,l,h}(k))$$

is the input to the auto regressive filter and $\rho_{i,l,h}(k)$ denotes the correlation between the output *l*-th and *h*-th interference cancelling unit.

**26.** Method of adaptive multiuser interference cancellation according to claim 25, **characterized in that** the correlation between the output *l*-th and *h*-th interference cancelling unit is determined according to

$$\rho_{i,l,h}(k) = \begin{cases} \dfrac{\sum_{n=1}^{k} \beta^{k-n}\left|y_{i-1,l}^{*}(n)y_{i,h}(n)\right|}{\sum_{n=1}^{k} \beta^{k-n}\left|y_{i,l}^{*}(n)\right|\left|y_{i,h}(n)\right|} & h \le l \\[3mm] \dfrac{\sum_{n=1}^{k} \beta^{k-n}\left|y_{i,l}^{*}(n)y_{i,h}(n)\right|}{\sum_{n=1}^{k} \beta^{k-n}\left|y_{i,l}^{*}(n)\right|\left|y_{i,h}(n)\right|} & h > l \end{cases}$$

wherein
$\beta$ is a factor provided to track a change of a communication channel.

**27.** Method of adaptive multiuser interference cancellation according to claim 26, **characterized in that** intial values are set to

$$\Phi_{i,l}(0) = \begin{cases} 1 & l = 1 \\ 0 & l \ne 1 \end{cases} \quad i = 1, \ldots, N, \quad l, h = 1, \ldots, M$$

and

$$\rho_{i,l,h}(0) = 0, \quad c_{i,j}(0) = 1 + j \cdot 0 \quad i = 1, \ldots, N, \quad l, h = 1, \ldots, M.$$

**28.** Method of multiuser detection for extracting user signals from reception signals without a priori information on interference, comprising the steps:

a) executing a first stage of multiuser adaptive interference cancellation to extract user signals from the reception signals; wherein

a1) a first user signal is extracted from received signals using a constant modulus algorithm; and
a2) further user signals are extracted from the received signals by removing previously determined user signals from the received signals and by subsequent signal extraction with respect to the further user signals;

b) executing at least one further stage of multiuser adaptive interference cancellation according to one of the claims 18 to 27 in cascade to the first stage of multiuser adaptive interference cancellation; wherein
c) user signals extracted by a preceeding multiuser adaptive interference canceller are improved in reliability using a correlation measure between different user signals as indication of interference.

**29.** Computer program product directly loadable into the internal memory of an adaptive multiuser interference canceller comprising software code portions for performing the steps of one of the claims 18 to 27 when the product is run on a processor of the adaptive multiuser interference canceller.

**Patentansprüche**

**1.** Adaptiver Mehrbenutzer-Interferenzlöscher zur Verwendung in einem Mehrbenutzer-Detektor, der ausgelegt ist zum Extrahieren von Nutzersignalen aus Empfangssignalen ohne eine a priori Information der Interferenz, umfassend:

a) zumindest zwei Interferenzlöschereinheiten (72-76), die ausgelegt sind zum Empfangen verwandter, aus Empfangssignalen extrahierter Nutzersignale und zum Verbessern der Zuverlässigkeit der extrahierten Nutzersignale, wobei jede Interferenzlöschereinheit umfasst:

a1) einen adaptiven Interferenzlöscher (77), der ausgelegt ist zum Bestimmen einer Replik der Interferenz für ein verwandtes Nutzersignal und zum Entfernen der Interferenz aus dem verwandten Nutzersignal;
a2) einen adaptiven Decoder (78), der ausgelegt ist zum Empfangen eines Ausgabesignals von dem adaptiven Interferenzlöscher und zum Decodieren eines extrahierten Nutzersignals mit einer verbesserten Zuverlässigkeit aus dem Ausgabesignal;

**dadurch gekennzeichnet, dass**
b) ein Korrelationsmaß zwischen unterschiedlichen extrahierten Nutzersignalen mit verbesserter Zuverlässigkeit als eine Indikation der Interferenz zwischen verschiedenen extrahierten Nutzersignalen zur Steuerung der Interferenzlöschungseinheit verwendet wird.

2. Adaptiver Mehrbenutzer-Interferenzlöscher nach Anspruch 1, **dadurch gekennzeichnet, dass** die Interferenzlöschereinheiten ausgelegt sind, im Zeitbereich zu arbeiten.

3. Adaptiver Mehrbenutzer-Interferenzlöscher nach Anspruch 2, **dadurch gekennzeichnet, dass** der adaptive Interferenzlöscher in jeder Interferenzlöschereinheit einen Replik-Generator zum Generieren einer Replik der Interferenz umfasst, und einen Interferenzlöscher, der ausgelegt ist zum Subtrahieren der Ausgabe des Replik-Generators von einem Eingabesignal des adaptiven Interferenzlöschers.

4. Adaptiver Mehrbenutzer-Interferenzlöscher nach Anspruch 3, **dadurch gekennzeichnet, dass** mit dem Korrelationsmaß ein Feedback in den Replik-Generator zur Steuerung des Replik-Generators durchgeführt wird.

5. Adaptiver Mehrbenutzer-Interferenzlöscher nach Anspruch 2, **dadurch gekennzeichnet, dass** der adaptive Decoder in jeder Interferenzlöschereinheit einen Filter umfasst, der ausgelegt ist zum Filtern des Ausgabesignals des verwandten adaptiven Interferenzlöschers der Interferenzlöschereinheit, zur Ausgabe eines verwandten extrahierten Nutzersignals und eine Gewichtssteuervorrichtung, die ausgelegt ist zum Steuern von Filterkoeffizienten des Filters.

6. Adaptiver Mehrbenutzer-Interferenzlöscher nach Anspruch 5, **dadurch gekennzeichnet, dass** mit dem Korrelationsmaß ein Feedback in die Gewichtssteuervorrichtung zur Steuerung des Gewichts durchgeführt wird.

7. Adaptiver Mehrbenutzer-Interferenzlöscher nach Anspruch 5 oder 6, **dadurch gekennzeichnet, dass** der Filter ein angezapfter Verzögerungsleitungsfilter ist.

8. Adaptiver Mehrbenutzer-Interferenzlöscher nach Anspruch 1, **dadurch gekennzeichnet, dass** die Interferenzlöschereinheiten ausgelegt sind, im Ortsraum zu arbeiten.

9. Adaptiver Mehrbenutzer-Interferenzlöscher nach Anspruch 8, **dadurch gekennzeichnet, dass** der adaptive Interferenzlöscher in jeder Interferenzlöschereinheit einen Replik-Generator umfasst, der ausgelegt ist zum Generieren einer Replik der Interferenz, und einen Interferenzlöscher, der ausgelegt ist zum Subtrahieren der Ausgabe des Replik-Generators von den Eingabesignalen des adaptiven Interferenzlöschers.

10. Adaptiver Mehrbenutzer-Interferenzlöscher nach Anspruch 4 oder 9, **dadurch gekennzeichnet, dass** der Replik-Generator ausgelegt ist zum Generieren der Replik der Interferenz gemäß

$$I_{i,j}(k) = T_{i,j}^{H}(k-1) \cdot \widetilde{Y}_{i,j}(k)$$

wobei
$i=1, ..., M$ ein Index gemäß einer Stufenzahl des adaptiven Mehrbenutzer-Interferenzlöschers in einem Mehrbenutzer-Detektor ist;
$j=1, ..., N$ ein Index gemäß einer Iterationszahl in dem adaptiven Mehrbenutzer-Interferenzlöscher ist;
$k$ ein Zeitindex bezüglich empfangener Signale ist;
$H$ eine Hermitisch Transponierte eines Vektors bzw. einer Matrix ist;
$T_{i,j}(k\text{-}1)$ eine Löschungsmatrix ist gemäß einer vorhergehenden Empfangszeit;
$Y_{i,j}(k)$ definiert ist gemäß

$$\tilde{Y}_{i,j}(k) = \left[ y_{i,1}(k),..., y_{i,j-1}(k), 0, y_{i-1,j+1}(k),..., y_{i-1,N}(k) \right]^T$$

mit $y_{i,j}(k)$ als ein Phasen-wiederhergestelltes Ausgabesignal bei Stufe $i$ und Iteration $j$ des Mehrbenutzer-Interferenzlöschers.

**11.** Adaptiver Mehrbenutzer-Interferenzlöscher nach Anspruch 10, **dadurch gekennzeichnet, dass** der Interferenzlöscher ausgelegt ist zum Löschen der Interferenz gemäß

$$S_{i,j}(k) = S(k) - I_{i,j}(k)$$

wobei
$S_{i,j}(k)$ die Ausgabe des adaptiven Interferenzlöschers gemäß Empfangszeitindex $k$ ist; und
$S(k)$ ein Signalvektor gemäß einem empfangenen Signal ist.

**12.** Adaptiver Mehrbenutzer-Interferenzlöscher nach Anspruch 10 oder 11, **dadurch gekennzeichnet, dass** der adaptive Decoder einen Entscheidungs-anweisenden Decoder umfasst, der ausgelegt ist zum Bestimmen einer Phasenverschiebung $c_{i,j}(k)$ des Empfangs, eine adaptive Steuereinheit, die ausgelegt ist zum Bestimmen eines Gewichtsfaktors $W_{i,j}(k)$ zum Verarbeiten der Ausgabe des adaptiven Interferenzlöschers gemäß einem vorbestimmten Algorithmus, und eine Verarbeitungseinheit, die ausgelegt ist zum Berechnen einer decodierten Ausgabe gemäß

$$y_{i,j}(k) = \mathrm{sgn}(c_{i,j}(k-1) \cdot W_{i,j}^H(k-1) \cdot S_{i,j}(k)).$$

**13.** Adaptiver Mehrbenutzer-Interferenzlöscher nach Anspruch 12, **dadurch gekennzeichnet, dass** der Replik-Generator ausgelegt ist zum Bestimmen der Löschungsmatrix, durch ein Bestimmen eines Schätzungsfehlers gemäß

$$e_{i,j}(k) = S(k) - T_{i,j}^H(k-1) \cdot Y_{i,j}(k)$$

wobei

$$Y_{i,j}(k) = \left[ y_{i,1}(k),..., y_{i,j-1}(k), y_{i,j}(k), y_{i-1,j+1}(k),..., y_{i-1,N}(k) \right]$$

und durch Ausführen einer Rekursion gemäß

$$T_{i,j}(k) = T_{i,j}(k-1) - \Phi_{i,j}(k) \cdot e_{i,j}^*(k) \cdot Y_{i,j}(k)$$

wobei * das konjugiert Komplexe ist; und $\Phi_{i,j}(k)$ eine Schrittweitenfunktion ist.

**14.** Adaptiver Mehrbenutzer-Interferenzlöscher nach Anspruch 13, **dadurch gekennzeichnet, dass** der Replik-Generator ausgelegt ist zum Bestimmen der Schrittweitenfunktion $\Phi_{i,j}(k)$ gemäß

$$\Phi_{i,j}(k) = \frac{\mu}{N} diag\left[ \Phi_{i,1}(k), \Phi_{i,2}(k),..., \Phi_{i,j}(k), \Phi_{i-1,j+1}(k),..., \Phi_{i-1,N}(k) \right]$$

wobei
μ eine vorbestimmte Konstante ist;
*diag* [*V*] eine Diagonalmatrix, die aus Vektorelementen eines Vektors *V* zusammengesetzt ist;
Diagonalelemente von $\Phi_{i,j}(k)$ definiert sind als Ausgaben eines autoregressiven Filters gemäß

$$\Phi_{i,l}(k) = \begin{cases} (1-\alpha) \cdot \Phi_{i,l}(k) + \alpha \cdot \Delta\Phi_{i,l}(k) & l \neq 1 \\ 1 & l = 1 \end{cases}$$

und wobei

$$\Delta\Phi_{i,j}(k) = \prod_{h=1}^{K} (1 - \rho_{i,l,h}(k))$$

die Eingabe in den autoregressiven Filter ist und $\rho_{i,l,h}(k)$ die Korrelation zwischen der *1*-ten Ausgabe der h-ten Interferenzlöschereinheit ist.

15. Adaptiver Mehrbenutzer-Interferenzlöscher nach Anspruch 14, **dadurch gekennzeichnet, dass** der Replik-Generator ausgelegt ist zum Bestimmen der Korrelation zwischen der *l*-ten Ausgabe und der *h*-ten Interferenzlöscheinheit gemäß

$$\rho_{i,l,h}(k) = \begin{cases} \dfrac{\sum_{n=1}^{k} \beta^{k-n} \left| y_{i-1,l}^{*}(n)\, y_{i,h}(n) \right|}{\sum_{n=1}^{k} \beta^{k-n} \left| y_{i,l}^{*}(n) \right\| y_{i,h}(n) \right|} & h \leq l \\[4mm] \dfrac{\sum_{n=1}^{k} \beta^{k-n} \left| y_{i,l}^{*}(n)\, y_{i,h}(n) \right|}{\sum_{n=1}^{k} \beta^{k-n} \left| y_{i,l}^{*}(n) \right\| y_{i,h}(n) \right|} & h > l \end{cases}$$

wobei
β ein Faktor zur Nachverfolgung einer Veränderung in einem Kommunikationskanal ist.

16. Adaptiver Mehrbenutzer-Interferenzlöscher nach Anspruch 15, **dadurch gekennzeichnet, dass** der Replik-Generator ausgelegt ist zum Einstellen von Anfangswerten gemäß

$$\Phi_{i,l}(0) = \begin{cases} 1 & l = 1 \\ 0 & l \neq 1 \end{cases} \qquad i = 1,...,N \qquad l,h = 1,...,M$$

und

$$\rho_{i,l,h}(0) = 0 \qquad c_{i,j}(0) = 1 + j \cdot 0 \qquad i = 1,...,N \qquad l,h = 1,...,M.$$

17. Mehrbenutzer-Detektor, ausgelegt zum Extrahieren von Nutzersignalen aus Empfangssignalen ohne eine a priori Information der Interferenz, umfassend:

a) eine erste adaptive Mehrbenutzer-Interferenzlöscherstufe, ausgelegt zum Extrahieren von Nutzersignalen aus den Empfangssignalen, und eine Vielzahl von kaskadierten Interferenzlöschereinheiten umfassend; wobei

a1) die erste Interferenzlöschungseinheit in der Kaskade ausgelegt ist zum Extrahieren eines ersten Nutzersignals aus empfangenen Signalen, unter Verwendung eines Konstant-Modulus-Algorithmus; und
a2) weitere Interferenzlöschungseinheiten in der Kaskade ausgelegt sind zum Extrahieren weiterer Nutzersignale aus den empfangenen Signalen durch ein Entfernen von davor bestimmter Nutzersignale aus den empfangenen Signalen und durch ein anschließendes Signalextrahieren bezüglich der weiteren Nutzersignale;

b) zumindest eine weitere adaptive Mehrbenutzer-Interferenzlöscherstufe gemäß einem der Ansprüche 1 bis 16 auf die erste Stufe des adaptiven Mehrbenutzer-Interferenzlöschers kaskadiert wird und ausgelegt ist zum Empfangen der Nutzersignale, die durch einen vorhergehenden adaptiven Mehrbenutzer-Interferenzlöscher extrahiert wurden, und die Zuverlässigkeit der Nutzersignale zu verbessern, unter Verwendung eines Korrelationsmaßes zwischen unterschiedlichen extrahierten Nutzersignalen, als ein Anzeichen der Interferenz zwischen den extrahierten Nutzersignalen zur Steuerung des weiteren adaptiven Mehrbenutzer-Interferenzlöscher.

18. Verfahren zur adaptiven Mehrbenutzer-Interferenzlöschung in einem Mehrbenutzer-Detektor zum Extrahieren von Nutzersignalen aus Empfangssignalen ohne eine a priori Information der Interferenz, die Schritte umfassend:

a) Empfangen von aus Empfangssignalen extrahierten Nutzersignalen zur Verbesserung der Zuverlässigkeit;
b) Generierung einer Replik der Interferenz für das Nutzersignal;
c) Löschung der Interferenz aus den Nutzersignalen;
d) Decodieren von Nutzersignalen mit einer verbesserten Zuverlässigkeit aus Nutzersignalen mit entfernter Interferenz;
**dadurch gekennzeichnet, dass**
e) ein Korrelationsmaß zwischen unterschiedlichen Nutzersignalen als ein Anzeichen der Interferenz zwischen unterschiedlichen Nutzersignalen während der Interferenzlöschung verwendet wird.

19. Verfahren zur adaptiven Mehrbenutzer-Interferenzlöschung nach Anspruch 18, **dadurch gekennzeichnet, dass** es im Zeitbereich betrieben wird.

20. Verfahren zur adaptiven Mehrbenutzer-Interferenzlöschung nach Anspruch 18, **dadurch gekennzeichnet, dass** es im Ortsraum betrieben wird.

21. Verfahren zur adaptiven Mehrbenutzer-Interferenzlöschung nach Anspruch 20, **dadurch gekennzeichnet, dass** die Replik der Interferenz generiert wird gemäß

$$I_{i,j}(k) = T_{i,j}^{H}(k-1) \cdot \tilde{Y}_{i,j}(k)$$

wobei
$i=1, ..., M$ ein Index gemäß einer Stufenzahl des adaptiven Mehrbenutzer-Interferenzlöschers in einem Mehrbenutzerdetektor ist;
$j=1, ..., N$ ein Index gemäß einer Iterationszahl in dem adaptiven Mehrbenutzer-Interferenzlöscher ist;
$k$ ein Zeitindex bezüglich empfangener Signale ist;
$H$ eine Hermitisch Transponierte eines Vektors bzw. einer Matrix ist;
$T_{i,j}(k$-1) eine Löschungsmatrix gemäß eines vorhergehenden Empfangszeit ist;
$\tilde{Y}_{i,j}(k)$ definiert ist gemäß

$$\tilde{Y}_{i,j}(k) = \left[ y_{i,1}(k),..., y_{i,j-1}(k), 0, y_{i-1,j+1}(k),..., y_{i-1,N}(k) \right]^{T}$$

mit $y_{i,j}(k)$ als ein Phasen-wiederhergestelltes Ausgabesignal bei Stufe $i$ und Iteration $j$ des Mehrbenutzer-Interferenzlöschers.

22. Verfahren zur adaptiven Mehrbenutzer-Interferenzlöschung nach Anspruch 21, **dadurch gekennzeichnet, dass** die Interferenz gelöscht wird gemäß

$$S_{i,j}(k) = S(k) - I_{i,j}(k)$$

wobei

$S_{i,j}(k)$ die Ausgabe des adaptiven Interferenzlöschers gemäß Empfangszeitindex $k$ ist; und
$S(k)$ ein Signalvektor gemäß einem empfangenen Signal ist.

23. Verfahren zur adaptiven Mehrbenutzer-Interferenzlöschung nach Anspruch 21 oder 22, **dadurch gekennzeichnet, dass** ein Decodieren von Nutzersignalen erreicht wird in einem Entscheidungs-anweisenden Decoder gemäß folgender Schritte:

Bestimmen einer Phasenverschiebung $c_{i,j}(k)$ des Empfangs;
Bestimmen eines Gewichtsfaktors $W_{i,j}(k)$ zum Verarbeiten des Resultats der Interferenzlöschung gemäß einem vorbestimmten Algorithmus; und
Berechnen einer decodierten Ausgabe gemäß

$$y_{i,j}(k) = \mathrm{sgn}(c_{i,j}(k-1) \cdot W_{i,j}^{H}(k-1) \cdot S_{i,j}(k)).$$

24. Verfahren zur adaptiven Mehrbenutzer-Interferenzlöschung nach Anspruch 23, **dadurch gekennzeichnet, dass** die Löschungsmatrix eingestellt wird durch ein Bestimmen eines Schätzungsfehlers gemäß

$$e_{i,j}(k) = S(k) - T_{i,j}^{H}(k-1) \cdot Y_{i,j}(k)$$

wobei

$$Y_{i,j}(k) = \left[ y_{i,1}(k),..., y_{i,j-1}(k), y_{i,j}(k), y_{i-1,j+1}(k),..., y_{i-1,N}(k) \right]$$

und durch Ausführen einer Rekursion gemäß

$$T_{i,j}(k) = T_{i,j}(k-1) - \Phi_{i,j}(k) \cdot e_{i,j}^{*}(k) \cdot Y_{i,j}(k)$$

wobei * das konjugiert Komplexe ist; und $\Phi_{i,j}(k)$ eine Schrittweitenfunktion ist.

25. Verfahren zur adaptiven Mehrbenutzer-Interferenzlöschung nach Anspruch 24, **dadurch gekennzeichnet, dass** die Schrittweitenfunktion $\Phi_{i,j}(k)$ bestimmt wird gemäß

$$\Phi_{i,j}(k) = \frac{\mu}{N} diag \left[ \Phi_{i,1}(k), \Phi_{i,2}(k),..., \Phi_{i,j}(k), \Phi_{i-1,j+1}(k),..., \Phi_{i-1,N}(k) \right]$$

wobei
$\mu$ eine vorbestimmte Konstante ist;
$diag\ [V]$ eine Diagonalmatrix ist, die aus Vektorelementen eines Vektors $V$ zusammengesetzt ist;

Diagonalelemente von $\Phi_{i,j}(k)$ definiert sind als Ausgaben eines autoregressiven Filters gemäß

$$\Phi_{i,l}(k) = \begin{cases} (1-\alpha) \cdot \Phi_{i,l}(k) + \alpha \cdot \Delta\Phi_{i,l}(k) & l \neq 1 \\ 1 & l = 1 \end{cases}$$

und wobei

$$\Delta\Phi_{i,j}(k) = \prod_{h=1}^{K} (1 - \rho_{i,l,h}(k))$$

die Eingabe in den autoregressiven Filter ist und $\rho_{i,l,h}(k)$ die Korrelation zwischen der *l*-ten Ausgabe der *h*-ten Interferenzlöscheinheit ist.

**26.** Verfahren zur adaptiven Mehrbenutzer-Interferenzlöschung nach Anspruch 25, **dadurch gekennzeichnet, dass** die Korrelation zwischen der *l*-ten Ausgabe der *h*-ten Interferenzlöschereinheit bestimmt wird gemäß

$$\rho_{i,l,h}(k) = \begin{cases} \dfrac{\sum_{n=1}^{k} \beta^{k-n} \left| y_{i-1,l}^{*}(n)\, y_{i,h}(n) \right|}{\sum_{n=1}^{k} \beta^{k-n} \left| y_{i,l}^{*}(n) \| y_{i,h}(n) \right|} & h \leq l \\[4mm] \dfrac{\sum_{n=1}^{k} \beta^{k-n} \left| y_{i,l}^{*}(n)\, y_{i,h}(n) \right|}{\sum_{n=1}^{k} \beta^{k-n} \left| y_{i,l}^{*}(n) \| y_{i,h}(n) \right|} & h > l \end{cases}$$

wobei
β ein Faktor zur Nachverfolgung einer Veränderung in einem Kommunikationskanal ist.

**27.** Verfahren zur adaptiven Mehrbenutzer-Interferenzlöschung nach Anspruch 26, **dadurch gekennzeichnet, dass** die Anfangswerte eingestellt werden nach

$$\Phi_{i,l}(0) = \begin{cases} 1 & l = 1 \\ 0 & l \neq 1 \end{cases} \qquad i = 1,...,N \qquad l,h = 1,...,M$$

und

$$\rho_{i,l,h}(0) = 0 \qquad c_{i,j}(0) = 1 + j \cdot 0 \qquad i = 1,...,N \qquad l,h = 1,...,M.$$

**28.** Verfahren zur Mehrbenutzer-Erfassung zum Extrahieren von Nutzersignalen aus Empfangssignalen ohne eine a priori Information der Interferenz, die Schritte umfassend:

a) Ausführen einer ersten Stufe der adaptiven Mehrbenutzer-Interferenzlöschung zum Extrahieren von Nutzersignalen aus den Empfangssignalen; wobei

a1) ein erstes Nutzersignal aus empfangenen Signalen unter Verwendung eines Konstant-Modulus-Algorithmus extrahiert wird; und

a2) weitere Nutzersignale aus den empfangenen Signalen extrahiert werden, durch ein Entfernen vorher bestimmter Nutzersignale aus den empfangenen Signalen und durch eine anschließende Signalextrahierung bezüglich der weiteren Nutzersignale;

b) Ausführen zumindest einer weiteren Stufe der adaptiven Mehrbenutzer-Interferenzlöschung gemäß einem der Ansprüche 18 bis 27 in einer Kaskade zu der ersten Stufe einer adaptiven Mehrbenutzer-Interferenzlöschung; wobei

c) Nutzersignale, die durch einen vorherigen adaptiven Mehrbeutzer-Interferenzlöscher extrahiert wurden, in der Zuverlässigkeit verbessert werden, unter Verwendung eines Korrelationsmaßes zwischen unterschiedlichen Nutzersignalen als Anzeichen der Interferenz.

29. Computerprogramm-Produkt, das direkt in die interne Speichereinheit eines adaptiven Mehrbenutzer-Interferenzlöschers ladbar ist, mit einem Softwarecode zum Durchführen der Schritte nach einem der Ansprüche 18 bis 27, wenn des Produkt auf einem Prozessor des adaptiven Mehrbenutzer-Interferenzlöschers läuft.

**Revendications**

1. Eliminateur d'interférences multiutilisateur adaptatif pour une utilisation dans un détecteur multiutilisateur adapté pour extraire des signaux d'utilisateurs à partir de signaux de réception sans information à priori sur l'interférence, comprenant:

   a) au moins deux unités (72-76) d'élimination d'interférences adaptées pour recevoir des signaux d'utilisateurs correspondants extraits à partir de signaux de réception et pour améliorer la fiabilité des signaux d'utilisateurs extraits, dans lequel chaque unité d'élimination d'interférences comprend:

   a1) un éliminateur d'interférences adaptatif (77) adapté pour déterminer une réplique d'interférence pour un signal d'utilisateur correspondant et pour enlever l'interférence du signal d'utilisateur correspondant;
   a2) un décodeur adaptatif (78) adapté pour recevoir un signal de sortie en provenance de l'éliminateur d'interférences adaptatif et pour décoder un signal d'utilisateur extrait ayant une fiabilité améliorée à partir du signal de sortie;

   **caractérisé en ce que**
   b) une mesure de corrélation entre différents signaux d'utilisateurs extraits ayant une fiabilité améliorée est utilisée comme indication d'interférence entre différents signaux d'utilisateurs extraits pour le contrôle des unités d'élimination d'interférences.

2. Eliminateur d'interférences multiutilisateur adaptatif selon la revendication 1, **caractérisé en ce que** les unités d'élimination d'interférences sont adaptées pour fonctionner dans le domaine temporel.

3. Eliminateur d'interférences multiutilisateur adaptatif selon la revendication 2, **caractérisé en ce que** l'éliminateur d'interférences adaptatif présent dans chaque unité d'élimination d'interférences comprend un générateur de réplique adapté pour générer une réplique d'interférence et un éliminateur d'interférences adapté pour soustraire la sortie du générateur de réplique d'un signal d'entrée de l'éliminateur d'interférences adaptatif.

4. Eliminateur d'interférences multiutilisateur adaptatif selon la revendication 3, **caractérisé en ce que** la mesure de corrélation est réinjectée dans le générateur de réplique pour le contrôle du générateur de réplique.

5. Eliminateur d'interférences multiutilisateur adaptatif selon la revendication 2, **caractérisé en ce que** le décodeur adaptatif présent dans chaque unité d'élimination d'interférences comprend un filtre adapté pour filtrer le signal de sortie de l'éliminateur d'interférences adaptatif correspondant de l'unité d'élimination d'interférences pour sortir un signal d'utilisateur extrait correspondant et un dispositif de contrôle de pondération adapté pour commander des coefficients de filtrage du filtre.

6. Eliminateur d'interférences multiutilisateur adaptatif selon la revendication 5, **caractérisé en ce que** la mesure de corrélation est réinjectée dans l'unité de contrôle de pondération pour la commande de la pondération.

**7.** Eliminateur d'interférences multiutilisateur adaptatif selon la revendication 5 ou 6, **caractérisé en ce que** le filtre est un filtre constitué d'une ligne de retard à prises.

**8.** Eliminateur d'interférences multiutilisateur adaptatif selon la revendication 1, **caractérisé en ce que** les unités d'élimination d'interférences sont adaptées pour fonctionner dans le domaine spatial.

**9.** Eliminateur d'interférences multiutilisateur adaptatif selon la revendication 8, **caractérisé en ce que** l'éliminateur d'interférences adaptatif présent dans chaque unité d'élimination d'interférences comprend un générateur de réplique adapté pour générer une réplique d'interférence et un éliminateur d'interférences adapté pour soustraire la sortie du générateur de réplique des signaux d'entrée de l'éliminateur d'interférences adaptatif.

**10.** Eliminateur d'interférences multiutilisateur adaptatif selon la revendication 4 ou 9, **caractérisé en ce que** le générateur de réplique est adapté pour générer la réplique d'interférence selon la formule

$$I_{i,j}(k) = T^H{}_{i,j}(k-1) \cdot \tilde{Y}_{i,j}(k)$$

dans laquelle

$i = 1,...,M$ est un index correspondant au numéro du niveau de l'éliminateur d'interférences multiutilisateur adaptatif présent dans un détecteur multiutilisateur;

$j = 1,...,N$ est un index correspondant au numéro de l'itération effectuée dans l'éliminateur d'interférences multiutilisateur adaptatif;

$k$ est un index de temps par rapport à des signaux reçus;

$H$ est une transposée Hermétienne d'un vecteur et d'une matrice, respectivement;

$T_{i,j}(k-1)$ est une matrice d'élimination correspondant à un temps de réception précédent;

$\tilde{Y}_{i,j}(k)$ est défini conformément à la formule

$$\tilde{Y}_{i,j}(k) = [y_{i,1}(k),...,y_{i,j-1}(k),0,y_{i-1,j+1}(k),...,y_{i-1,N}(k)]^T$$

avec $y_{i,j}(k)$ comme signal de sortie à phase retrouvée au niveau $i$ de l'éliminateur d'interférences multiutilisateur adaptatif et à l'itération $j$.

**11.** Eliminateur d'interférences multiutilisateur adaptatif selon la revendication 10, **caractérisé en ce que** l'éliminateur d'interférences est adapté pour éliminer une interférence conformément à la formule

$$S_{i,j}(k) = S(k) - I_{i,j}(k)$$

dans laquelle

$S_{i,j}(k)$ est la sortie de l'éliminateur d'interférences adaptatif correspondant à l'index de temps de réception k; et

$S(k)$ est un vecteur de signal correspondant à un signal reçu.

**12.** Eliminateur d'interférences multiutilisateur adaptatif selon la revendication 10 ou 11, **caractérisé en ce que** le décodeur adaptatif comprend un décodeur orienté vers une décision adapté pour déterminer un décalage de phase $c_{i,j}(k)$ de réception, une unité de contrôle adaptative adaptée pour déterminer un facteur de pondération $W_{i,j}(k)$ pour le traitement de la sortie de l'éliminateur d'interférences adaptatif conformément à un algorithme prédéterminé, et une unité de traitement adaptée pour calculer une sortie décodée conformément à la formule

$$y_{i,j}(k) = \text{sgn}(c_{i,j}(k-1) \cdot W^H{}_{i,j}(k-1) \cdot S_{i,j}(k)).$$

**13.** Eliminateur d'interférences multiutilisateur adaptatif selon la revendication 12, **caractérisé en ce que** le générateur de réplique est adapté pour déterminer la matrice d'élimination en déterminant une erreur d'estimation conformément à la formule

$$e_{i,j}(k) = S(k) - T^H_{i,j}(k-1) \cdot Y_{i,j}(k)$$

dans laquelle

$$Y_{i,j}(k) = [y_{i,1}(k), \ldots, y_{i,j-1}(k), y_{i,j}(k), y_{i-1,j+1}(k), \ldots, y_{i-1,N}(k)]$$

et en exécutant une récursivité conformément à la formule

$$T_{i,j}(k) = T_{i,j}(k-1) - \Phi_{i,j}(k) \cdot e^*_{i,j}(k) \cdot Y_{i,j}(k)$$

dans laquelle
* est le nombre complexe conjugué; et $\Phi_{i,j}(k)$ est une fonction de dimension de pas.

**14.** Eliminateur d'interférences multiutilisateur adaptatif selon la revendication 13, **caractérisé en ce que** le générateur de réplique est adapté pour déterminer la fonction $\Phi_{i,j}(k)$ de dimension de pas conformément à la formule

$$\Phi_{i,j}(k) = \frac{\mu}{N} diag[\Phi_{i,1}(k), \Phi_{i,2}(k), \ldots, \Phi_{i,j}(k), \Phi_{i-1,j+1}(k), \ldots, \Phi_{i-1,N}(k)]$$

dans laquelle
$\mu$ est une constante prédéterminée;
*diag*[*V*] est une matrice diagonale créée à partir d'éléments de vecteur d'un vecteur *V*;
les éléments diagonaux de $\Phi_{i,j}(k)$ sont définis comme des sorties d'un filtre autorégressif conformément à la formule

$$\Phi_{i,l}(k) = \begin{cases} (1-\alpha) \cdot \Phi_{i,l}(k) + \alpha \cdot \Delta\Phi_{i,l}(k) & l \neq 1 \\ 1 & l = 1 \end{cases}$$

et dans laquelle

$$\Delta\Phi_{i,l}(k) = \prod_{h=1}^{K} (1-\rho_{i,l,h}(k))$$

est l'entrée vers le filtre autorégressif et $\rho_{i,l,h}(k)$ indique la corrélation entre la $l$-me sortie et la $h$-me unité d'élimination d'interférences.

**15.** Eliminateur d'interférences multiutilisateur adaptatif selon la revendication 14, **caractérisé en ce que** le générateur de réplique est adapté pour déterminer la corrélation entre la $l$-me sortie et la $h$-me unité d'élimination d'interférences conformément à la formule

$$\rho_{i,l,h}(k) = \begin{cases} \dfrac{\Sigma^k_{n=1}\ \beta^{k-n}\ \left| y^*_{i-1,l}(n)\ y_{i,h}(n) \right|}{\Sigma^k_{n=1}\ \beta^{k-n}\ \left| y^*_{i,l}(n) \right|\left| y_{i,h}(n) \right|} & h \le l \\[3ex] \dfrac{\Sigma^k_{n=1}\ \beta^{k-n}\ \left| y^*_{i,l}(n)\ y_{i,h}(n) \right|}{\Sigma^k_{n=1}\ \beta^{k-n}\ \left| y^*_{i,l}(n) \right|\left| y_{i,h}(n) \right|} & h > l \end{cases}$$

dans laquelle

$\beta$ est un facteur prévu pour repérer une modification d'un canal de communication.

**16.** Eliminateur d'interférences multiutilisateur adaptatif selon la revendication 15, **caractérisé en ce que** le générateur de réplique est adapté pour régler des valeurs initiales conformément aux formules

$$\Phi_{i,l}(0) = \begin{cases} 1 & l = 1 \\ 0 & l \neq 1 \end{cases} \qquad i = 1,\dots,N, \qquad l,h = 1,\dots,M$$

et

$$\rho_{i,l,h}(0) = 0, \qquad c_{i,j}(0) = 1 + j \cdot 0 \qquad i = 1,\dots,N \qquad l,h = 1,\dots,M.$$

**17.** Détecteur multiutilisateur adapté pour extraire des signaux d'utilisateurs à partir de signaux de réception sans information à priori sur l'interférence, comprenant:

    a) un premier niveau d'éliminateur d'interférences multiutilisateur adaptatif adapté pour extraire des signaux d'utilisateurs à partir des signaux de réception et comprenant plusieurs unités en cascade d'élimination d'interférences; dans lequel

        a1) la première unité d'élimination d'interférences dans la cascade est adaptée pour extraire un premier signal d'utilisateur à partir de signaux reçus en utilisant un algorithme à module constant; et
        a2) les unités d'élimination d'interférences suivantes dans la cascade sont adaptées pour extraire d'autres signaux d'utilisateurs à partir des signaux reçus en enlevant des signaux d'utilisateurs déterminés précédemment à partir des signaux reçus et par une extraction ultérieure de signal par rapport aux autres signaux d'utilisateurs;

    b) au moins un autre niveau d'éliminateur d'interférences multiutilisateur adaptatif selon une des revendications 1 à 16 mis en cascade avec l'éliminateur d'interférences multiutilisateur adaptatif du premier niveau et adapté pour recevoir les signaux d'utilisateurs extraits par un éliminateur d'interférences multiutilisateur adaptatif précédent et pour améliorer la fiabilité des signaux d'utilisateurs en utilisant une mesure de corrélation entre différents signaux d'utilisateurs extraits comme indication d'une interférence entre les signaux d'utilisateurs extraits pour le contrôle de l'autre éliminateur d'interférences multiutilisateur adaptatif.

**18.** Méthode d'élimination d'interférences multiutilisateur adaptative dans un détecteur multiutilisateur destinée à extraire des signaux d'utilisateurs à partir de signaux de réception sans information à priori sur l'interférence, comprenant les étapes consistant à:

    a) recevoir des signaux d'utilisateurs extraits à partir de signaux de réception en vue d'une amélioration de la fiabilité;
    b) générer une réplique d'interférence pour les signaux d'utilisateurs;
    c) éliminer l'interférence des signaux d'utilisateurs;

d) décoder des signaux d'utilisateurs ayant une fiabilité améliorée à partir des signaux d'utilisateurs ayant l'interférence supprimée;
**caractérisée en ce que**
e) une mesure de corrélation entre différents signaux d'utilisateurs est utilisée comme une indication de l'interférence entre différents signaux d'utilisateurs pendant l'élimination des interférences.

**19.** Méthode d'élimination d'interférences multiutilisateur adaptative selon la revendication 18, **caractérisée en ce qu'**elle est mise en oeuvre dans le domaine temporel.

**20.** Méthode d'élimination d'interférences multiutilisateur adaptative selon la revendication 18, **caractérisée en ce qu'**elle est mise en oeuvre dans le domaine spatial.

**21.** Méthode d'élimination d'interférences multiutilisateur adaptative selon la revendication 20, **caractérisée en ce que** la réplique d'interférence est générée conformément à la formule

$$I_{i,j}(k) = T^H_{i,j}(k-1) \cdot \tilde{Y}_{i,j}(k)$$

dans laquelle
$i = 1,...,M$ est un index correspondant au numéro du niveau de l'éliminateur d'interférences multiutilisateur adaptatif présent dans un détecteur multiutilisateur;
$j = 1,...,N$ est un index correspondant au numéro de l'itération effectuée dans l'éliminateur d'interférences multiutilisateur adaptatif;
$k$ est un index de temps par rapport à des signaux reçus;
$H$ est une transposée Hermétienne d'un vecteur et d'une matrice, respectivement;
$T_{i,j}(k$-1) est une matrice d'élimination correspondant à un temps de réception précédent;
$\tilde{Y}_{i,j}(k)$ est défini conformément à la formule

$$\tilde{Y}_{i,j}(k) = [y_{i,1}(k),...,y_{i,j-1}(k),0,y_{i-1,j+1}(k),...,y_{i-1,N}(k)]^T$$

avec $y_{i,j}(k)$ comme signal de sortie à phase retrouvée au niveau $i$ de l'éliminateur d'interférences multiutilisateur adaptatif et à l'itération $j$.

**22.** Méthode d'élimination d'interférences multiutilisateur adaptative selon la revendication 21, **caractérisée en ce que** l'interférence est éliminée conformément à la formule

$$S_{i,j}(k) = S(k) - I_{i,j}(k)$$

dans laquelle
$S_{i,j}(k)$ est la sortie de l'éliminateur d'interférences adaptatif correspondant à l'index de temps de réception $k$; et
S(k) est un vecteur de signal correspondant à un signal reçu.

**23.** Méthode d'élimination d'interférences multiutilisateur adaptative selon la revendication 21 ou 22, **caractérisée en ce que** le décodage de signaux d'utilisateurs est effectué dans un décodeur orienté vers une décision conformément aux étapes suivantes:

déterminer un décalage de phase $c_{i,j}(k)$ de réception;
déterminer un facteur de pondération $W_{i,j}(k)$ pour le traitement de l'élimination d'interférences du résultat conformément à un algorithme prédéterminé; et
calculer une sortie décodée conformément à la formule

$$y_{i,j}(k) = \text{sgn}(c_{i,j}(k-1) \cdot W^{H}_{i,j}(k-1) \cdot S_{i,j}(k)).$$

**24.** Méthode d'élimination d'interférences multiutilisateur adaptative selon la revendication 23, **caractérisée en ce que** la matrice d'élimination est créée en déterminant une erreur d'estimation conformément à la formule

$$e_{i,j}(k) = S(k) - T^{H}_{i,j}(k-1) \cdot Y_{i,j}(k)$$

dans laquelle

$$Y_{i,j}(k) = [y_{i,1}(k),\ldots,y_{i,j-1}(k),y_{i,j}(k),y_{i-1,j+1}(k),\ldots,y_{i-1,N}(k)]$$

et en exécutant une récursivité conformément à la formule

$$T_{i,j}(k) = T_{i,j}(k-1) - \Phi_{i,j}(k) \cdot e^{*}_{i,j}(k) \cdot Y_{i,j}(k)$$

dans laquelle
\* est le nombre complexe conjugué;
et $\Phi_{i,j}(k)$ est une fonction de dimension de pas.

**25.** Méthode d'élimination d'interférences multiutilisateur adaptative selon la revendication 24, **caractérisée en ce que** la fonction $\Phi_{i,j}(k)$ de dimension de pas est déterminée conformément à la formule

$$\Phi_{i,j}(k) = \frac{\mu}{N} diag[\Phi_{i,1}(k),\Phi_{i,2}(k),\ldots,\Phi_{i,j}(k),\Phi_{i-1,j+1}(k),\ldots,\Phi_{i-1,N}(k)]$$

dans laquelle
$\mu$ est une constante prédéterminée;
*diag*[*V*] est une matrice diagonale créée à partir d'éléments de vecteur d'un vecteur *V*;
les éléments diagonaux de $\Phi_{i,j}(k)$ sont définis comme des sorties d'un filtre autorégressif conformément à la formule

$$\Phi_{i,l}(k) = \begin{cases} (1-\alpha) \cdot \Phi_{i,l}(k) + \alpha \cdot \Delta\Phi_{i,l}(k) & l \neq 1 \\ 1 & l = 1 \end{cases}$$

et dans laquelle

$$\Delta\Phi_{i,l}(k) = \prod_{h=1}^{K} (1-\rho_{i,l,h}(k))$$

est l'entrée vers le filtre autorégressif et $\rho_{i,l,h}(k)$ indique la corrélation entre la *l*-me sortie et la *h*-me unité d'élimination d'interférences.

**26.** Méthode d'élimination d'interférences multiutilisateur adaptative selon la revendication 25, **caractérisée en ce que** la corrélation entre la $l^{-me}$ sortie et la $h^{-me}$ unité d'élimination d'interférences est déterminée conformément à la formule

$$
\rho_{i,l,h}(k) = \begin{cases} \dfrac{\Sigma^k_{n=1}\ \beta^{k-n}\ \left|y^*_{i-1,l}(n)\ y_{i,h}(n)\right|}{\Sigma^k_{n=1}\ \beta^{k-n}\ \left|y^*_{i,l}(n)\right|\left|y_{i,h}(n)\right|} & h \le l \\[4mm] \dfrac{\Sigma^k_{n=1}\ \beta^{k-n}\ \left|y^*_{i,l}(n)\ y_{i,h}(n)\right|}{\Sigma^k_{n=1}\ \beta^{k-n}\ \left|y^*_{i,l}(n)\right|\left|y_{i,h}(n)\right|} & h > l \end{cases}
$$

dans laquelle
β est un facteur prévu pour repérer une modification d'un canal de communication.

**27.** Méthode d'élimination d'interférences multiutilisateur adaptative selon la revendication 26, **caractérisée en ce que** des valeurs initiales sont réglées conformément aux formules

$$
\Phi_{i,l}(0) = \begin{cases} 1 & l = 1 \\ 0 & l \ne 1 \end{cases} \qquad i = 1,\dots,N, \qquad l,h = 1,\dots,M
$$

et

$$
\rho_{i,l,h}(0) = 0, \qquad c_{i,j}(0) = 1+j\cdot 0 \qquad i = 1,\dots,N \qquad l,h = 1,\dots,M.
$$

**28.** Méthode de détection multiutilisateur destinée à extraire des signaux d'utilisateurs à partir de signaux de réception sans information à priori sur l'interférence, comprenant les étapes consistant à:

a) exécuter un premier niveau d'élimination d'interférences multiutilisateur adaptative pour extraire des signaux d'utilisateurs à partir des signaux de réception; dans laquelle

a1) un premier signal d'utilisateur est extrait à partir des signaux reçus en utilisant un algorithme à module constant; et
a2) d'autres signaux d'utilisateurs sont extraits à partir des signaux reçus en enlevant des signaux d'utilisateurs déterminés précédemment à partir des signaux reçus et par une extraction ultérieure de signal par rapport aux autres signaux d'utilisateurs;

b) exécuter au moins un autre niveau d'élimination d'interférences multiutilisateur adaptative selon une des revendications 18 à 27 mis en cascade avec le premier niveau d'élimination d'interférences multiutilisateur adaptative; dans laquelle
c) les signaux d'utilisateurs extraits par un éliminateur d'interférences multiutilisateur adaptatif précédent sont améliorés en fiabilité par l'utilisation d'une mesure de corrélation entre différents signaux d'utilisateurs comme indication d'interférence.

**29.** Produit programme d'ordinateur pouvant être directement chargé dans la mémoire interne d'un éliminateur d'interférences multiutilisateur adaptatif comprenant des parties de codes de logiciel destinées à effectuer les étapes d'une des revendications 18 à 27 lorsque le produit est exécuté sur un processeur de l'éliminateur d'interférences multiutilisateur adaptatif.

Fig. 1

Fig. 2

Fig. 3

Fig. 4

Fig. 5

Fig. 6

Fig.7

Fig. 8

Fig. 9

Fig. 10

Fig. 11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **SUN JIN YEOM ; YONG WAN PARK.** Multiuser detection using CMA and the cancellation method in fast-fading channels. *52nd Vehicular Technology Conference Fall 2000, IEEE VTS Fall,* 24 September 2000, vol. 6, ISBN 0-7803-6507-0, 2844-2848

- **K. ABED-MERAIM ; S. ATTALLAH ; T. J. LIM ; M. O. DAMEN.** A blind interference canceller in DS-CDMA. *IEEE Conference Proceedings Article,* 29 October 2000, vol. 2, 847-850